(19) Europäisches Patentamt

European Patent Office

Office européen des brevets

(11) **EP 3 967 576 B1**

(12) **EUROPÄISCHE PATENTSCHRIFT**

(45) Veröffentlichungstag und Bekanntmachung des Hinweises auf die Patenterteilung:
**14.05.2025 Patentblatt 2025/20**

(21) Anmeldenummer: **21193862.6**

(22) Anmeldetag: **30.08.2021**

(51) Internationale Patentklassifikation (IPC):
**B62D 15/02** $^{(2006.01)}$ **G08G 1/14** $^{(2006.01)}$

(52) Gemeinsame Patentklassifikation (CPC):
**B62D 15/0285; B62D 15/027;** G08G 1/168

(54) **VERFAHREN ZUM BESTIMMEN EINER PARKPOSITION FÜR EIN KRAFTFAHRZEUG, FAHRERASSISTENZSYSTEM ZUM DURCHFÜHREN EINES SOLCHEN VERFAHRENS SOWIE KRAFTFAHRZEUG MIT EINEM FAHRERASSISTENZSYSTEM**

METHOD FOR DETERMINING A PARKING POSITION FOR A MOTOR VEHICLE, DRIVER ASSISTANCE SYSTEM FOR CARRYING OUT SUCH A METHOD AND MOTOR VEHICLE WITH A DRIVER ASSISTANCE SYSTEM

PROCÉDÉ DE DÉTERMINATION D'UNE POSITION DE STATIONNEMENT POUR UN VÉHICULE AUTOMOBILE, SYSTÈME D'AIDE À LA CONDUITE PERMETTANT DE METTRE EN OEUVRE LEDIT PROCÉDÉ, AINSI QUE VÉHICULE AUTOMOBILE DOTÉ D'UN SYSTÈME D'AIDE À LA CONDUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.09.2020 DE 102020211332**

(43) Veröffentlichungstag der Anmeldung:
**16.03.2022 Patentblatt 2022/11**

(73) Patentinhaber: **VOLKSWAGEN AG 38440 Wolfsburg (DE)**

(72) Erfinder:
• **Hüger, Philipp 38471 Rühen (DE)**
• **Busch, Sebastian 38114 Braunschweig (DE)**
• **Thomanek, Daniel 10318 Berlin (DE)**

(56) Entgegenhaltungen:
**EP-A1- 2 597 016     WO-A1-2018/177702
DE-A1- 102011 077 173     DE-A1- 102014 011 108
US-A1- 2017 096 168**

**Beschreibung**

Die Erfindung betrifft gemäß Patentanspruch 1 ein Verfahren zum Bestimmen bzw. Ermitteln einer Parkposition für ein noch nicht geparktes Kraftfahrzeug, das anhand der ermittelten bzw. zu ermittelnden Parkposition auf einem Querparkplatz geparkt werden soll. Des Weiteren betrifft die Erfindung gemäß Patentanspruch 8 ein Fahrerassistenzsystem, insbesondere ein zumindest teilautomatisches Parklenkassistenzsystem. Schließlich betrifft die Erfindung gemäß Patentanspruch 90 ein Kraftfahrzeug, insbesondere einen Personenkraftwagen, das mit einem solchen Fahrerassistenzsystem ausgerüstet ist.

Fahrerassistenzsysteme, die einen Nutzer, insbesondere Fahrer, eines Kraftfahrzeugs beim Parken des Kraftfahrzeugs zumindest teilweise unterstützen bzw. entsprechende Verfahren sind aus dem Stand der Technik bekannt. So offenbart beispielsweise die US 10 606 272 B2 ein Verfahren zum Führen eines in einem Parkbetriebsmodus betriebenen Fahrzeugs, wobei mittels einer Steuereinheit basierend auf einer Parkausrichtung mindestens eines benachbart parkenden Fahrzeugs ausgewählt wird, ob das zu parkende Fahrzeug vorwärtsgerichtet oder rückwärtsgerichtet auf einem Parkplatz geparkt wird.

Die US 8 319 663 B2 offenbart ein Parkassistenzsystem mit einer Parkassistenz-Steuereinheit, mittels derer eine Breite und eine Tiefe eines Parkplatzes und den Parkplatz beschränkende Objekte erfassbar sind. Die Parkassistenz-Steuereinheit legt hiernach eine Parkzielposition als einen belegbaren Parkraum fest, indem mittels der Parkassistenz-Steuereinheit die Breite und die Tiefe des Parkplatzes mit Fahrzeugdimensionen eines mit dem Parkassistenzsystem ausgerüsteten Fahrzeugs verglichen werden.

Ferner offenbart die EP 3 081 731 A1 ein Verfahren, das von einem Fahrzeug-Ausstiegs-Assistenzsystem zum Optimieren eines Aussteigens eines Insassen aus einem mit diesem Assistenzsystem ausgestatteten Fahrzeugs während eines Parkens desselben durchgeführt wird. Bei diesem herkömmlichen Verfahren wird anhand einer Sitzbelegungserkennung ein Türöffnungsraum stimmt, der erforderlich ist, damit der mittels der Sitzbelegungserkennung erkannte Insasse das Fahrzeug über die entsprechende Türöffnung verlassen kann. Basierend darauf werden eine optimale Parkroute und Parkposition festgelegt.

Beispielsweise offenbart die EP 2 597 016 A1 ein Parkassistenzsystem für Fahrzeuge. Hier kann mittels Sensoren ein Bereich in der Umgebung des Fahrzeugs erfasst werden, um in dem Bereich befindliche parkende Fahrzeuge bezüglich ihrer Parkrichtung einstufen zu können.

Die EP 2 597 016 A1 zeigt die Merkmale des Oberbegriffs des Anspruchs 1.

Des Weiteren offenbart die die DE 10 2011 077 173 A1 ein Verfahren zur Bestimmung einer Einparktrajektorie eines Fahrzeugs in eine Querparklücke.

Ferner offenbart die WO 2018/177702 A1 ein Parkassistenzsystem eines Fahrzeugs, mit welchem ermittelt werden kann, ob eine Kollisionsgefahr zwischen einer Tür des Fahrzeugs und einem benachbarten Fahrzeug vorliegt.

Es besteht jedoch heutzutage oftmals das Problem, dass Parkplätze, insbesondere Querparkplätze, die beispielsweise mittels einer Bodenmarkierung voneinander abgegrenzt sind, nicht vollständig bzw. vollumfänglich nutzbar sind, da benachbart zu diesem Querparkplatz parkende Fahrzeuge auf ihrem jeweils zu dem Querparkplatz benachbarten Parkplätzen zu eng an dem designierten Querparkplatz parken oder sogar teilweise den Querparkplatz, auf welchem das Kraftfahrzeug geparkt werden soll, zumindest teilweise belegen. Mit anderen Worten blockieren die benachbarten Kraftfahrzeuge den Querparkplatz zumindest teilweise, indem die benachbarten Kraftfahrzeuge auf der Bodenmarkierung oder die Bodenmarkierung überragend abgestellt worden sind. Zwar könnte unter Umständen ein Verlassen des eigenen Kraftfahrzeugs durch das herkömmliche Fahrzeug-Ausstiegs-Assistenzsystem sichergestellt werden; es kann aber dennoch zu Situationen kommen, bei denen dann durch die optimale Parkposition, die durch das Fahrzeug-Ausstiegs-Assistenzsystem festgelegt worden ist, ein Einsteigen und infolgedessen Wegfahren eines benachbart parkenden Kraftfahrzeugs nicht mehr sicher gewährleistet ist. Wird beispielsweise das Kraftfahrzeug, gemäß der durch das Fahrzeug-Ausstiegs-Assistenzsystem ermittelten Parkposition abgeparkt, könnte es hierdurch zu nah an dem benachbarten Kraftfahrzeug stehen, sodass beispielsweise eine Fahrertür des benachbarten Kraftfahrzeugs nicht mehr oder nur noch unzureichend öffenbar ist, wodurch der Fahrer des benachbarten Kraftfahrzeugs nur noch besonders umständlich in sein Kraftfahrzeug einsteigen kann. Es besteht weiter die Gefahr, dass der Fahrer des benachbarten Kraftfahrzeugs beim Versuch die Fahrertür zu öffnen, das mit dem Fahrzeug-Ausstiegs-Assistenzsystems ausgestattete Kraftfahrzeug beschädigt.

Es besteht also zum einen eine Unfallgefahr zwischen den nebeneinander parkenden Kraftfahrzeugen und zum anderen ist ein Stresslevel und/oder Frustrationslevel des Fahrers, der mit dem benachbarten Kraftfahrzeug losfahren möchte, in nachteiliger Weise erhöht, was sich bei einer eventuellen Fahrt negativ auf eine Verkehrssicherheit auswirken kann. Der Fahrer des benachbarten Kraftfahrzeugs nimmt das mit dem Fahrzeug-Ausstiegs-Assistenzsystem ausgerüstete Kraftfahrzeug als besonders rücksichtslos packend war. Diese gesamte Problematik wird noch dadurch verschärft, dass in dicht besiedelten Gebieten, beispielsweise Großstädten, generell Parkraum knapp ist oder wird und folglich eine besonders effiziente Ausnutzung von Parkraum anzustreben ist.

Aufgabe der vorliegenden Erfindung ist es, ein besonders effizientes und besonders sicheres Parken von Kraftfahrzeugen zu ermöglichen.

Diese Aufgabe wird durch ein Verfahren mit den in Patentanspruch 1 angegebenen Merkmalen gelöst, welches zum Bestimmen einer Parkposition für ein Kraftfahrzeug ausgebildet ist. Des Weiteren wird die Aufgabe durch ein Fahrerassistenzsystem mit den in Patentanspruch 8 angegebenen Merkmalen gelöst. Schließlich wird diese Aufgabe durch ein Kraftfahrzeug mit den in Patentanspruch 9 angegebenen Merkmalen gelöst.

Merkmale, Vorteile und vorteilhafte Ausgestaltungen des erfindungsgemäßen Fahrerassistenzsystems sind als Merkmale, Vorteile und vorteilhafte Ausgestaltungen des erfindungsgemäßen Verfahrens anzusehen, wobei die Mittel des Fahrerassistenzsystems zur Durchführung der Verfahrensschritte eingesetzt oder einsetzbar sind. Merkmale, Vorteile und vorteilhafte Ausgestaltungen des erfindungsgemäßen Fahrerassistenzsystems sind als Merkmale, Vorteile und vorteilhafte Ausgestaltungen des erfindungsgemäßen Kraftfahrzeugs anzusehen und umgekehrt.

Erfindungsgemäß ist ein Verfahren zum Bestimmen einer Parkposition für ein Kraftfahrzeug vorgeschlagen. Durch das Verfahren wird eine Parkposition für das noch nicht geparkte Kraftfahrzeug bestimmt bzw. ermittelt, wobei das Kraftfahrzeug dann anhand der ermittelten bzw. zu ermittelnden Parkposition auf einem Querparkplatz geparkt werden soll. Das Kraftfahrzeug, das anhand der Parkposition geparkt werden soll, wird im Folgenden als Egokraftfahrzeug bezeichnet und ist insbesondere als ein Kraftwagen, beispielsweise Personenkraftwagen, ausgebildet.

Bei dem Verfahren wird mittels einer Sensorik des Egokraftfahrzeugs ein Querparkplatz zumindest teilweise erfasst. Mit anderen Worten erstellt die Sensorik des Egokraftfahrzeugs Daten, die den Querparkplatz charakterisieren, beispielsweise eine Breite, Tiefe etc. des Querparkplatzes repräsentieren. Demnach stellt die Sensorik bei dem Verfahren einen den Querparkplatz zumindest teilweise charakterisierenden Parkplatzdatensatz bereit, welcher einer Steuereinheit des Egokraftfahrzeugs bereitgestellt wird. Bei der Steuereinheit handelt es sich insbesondere um die Steuereinheit eines Fahrerassistenzsystems, insbesondere Parklenkassistenzsystems. Der Parkplatzdatensatz charakterisiert also den Querparkplatz, auf/in welchem mittels des Egokraftfahrzeugs geparkt werden soll, zumindest teilweise. Das bedeutet, dass an dem Querparkplatz vorherrschende Gegebenheiten durch den Parkplatzdatensatz charakterisiert werden. Folglich werden die den Querparkplatz charakterisierenden Gegebenheiten in Datenform, nämlich in Form des Parkplatzdatensatzes, der Steuereinheit des Egokraftfahrzeugs bereitgestellt. Zu den Gegebenheiten, die den Querparkplatz zumindest teilweise charakterisieren, zählen - neben Breite und Tiefe des Querparkplatzes -, ob benachbart, insbesondere direkt benachbart, zu dem Querparkplatz wenigstens ein weiteres Kraftfahrzeug parkt, eine Ausrichtung bzw. Parkposition des benachbart parkenden Kraftfahrzeugs auf dessen Parkplatz, Objekte in/an dem Querparkplatz etc.

Bei dem Verfahren ist weiter vorgesehen, dass die Parkposition anhand des Parkplatzdatensatzes sowie anhand wenigstens eines Zugangsparameters des Egokraftfahrzeugs durch die Steuereinheit bestimmt wird, wobei der Zugangsparameter des Egokraftfahrzeugs eine Öffnungsmöglichkeit wenigstens eines Klappenelements des Egokraftfahrzeugs charakterisiert. Durch den wenigstens einen Zugangsparameter des Egokraftfahrzeugs ist also charakterisiert, ob bzw. wie weit das entsprechende Kappenelement des Kraftfahrzeugs öffenbar ist, wenn das Egokraftfahrzeug auf dem Querparkplatz geparkt worden ist. Bei dem Kappenelement handelt es sich insbesondere um eine Tür oder eine sonstige Klappe des Egokraftfahrzeugs, wobei diese Klappe bzw. das entsprechende Klappenelement zwischen einer Geschlossenstellung und wenigstens einer Offenstellung verstellbar ist. In der Geschlossenstellung, die durch einen ersten Endanschlag des Klappenelements gebildet ist, ist eine Öffnung einer Außenhaut des Egokraftfahrzeugs mittels des Klappenelements vollständig geschlossen. Dahingegen ist in einer von der Geschlossenstellung unterschiedlichen Stellung des Klappenelements jene Öffnung zumindest teilweise geöffnet, was bedeutet, dass das Klappenelement in diesem Zustand dann zumindest teilweise in die Offenstellung verstellt ist, sobald das Kappenelement aus dem Endanschlag der Geschlossenstellung ausgerückt ist. An einem entlang eines Verstellwegs des Klappenelements dem ersten Endanschlag gegenüberliegenden bzw. entgegengesetzten Endanschlag ist das Kappenelement vollständig in die Offenstellung verstellt und die zugeordnete Öffnung in der Außenhaut des Egokraftfahrzeugs so weit geöffnet, wie es bei bestimmungsgemäßem Gebrauch des Klappenelements möglich ist, insbesondere maximal.

Da übliche Kraftfahrzeuge mehrere Klappenelemente aufweisen, ist insbesondere vorgesehen, dass eine Anzahl der Zugangsparameter des Egokraftfahrzeugs einer Anzahl der Klappenelemente des Egokraftfahrzeugs entspricht. Weist also das Egokraftfahrzeug beispielsweise vier Türen sowie eine Laderaumklappe auf, bedeutet das, dass diese fünf Klappenelemente des Egokraftfahrzeugs relevant für das Verfahren sind. Insoweit weist also das Egokraftfahrzeug in diesem Fall zum Beispiel fünf separat voneinander zu betrachtende Zugangsparameter auf. Sollen weitere Klappenelemente des Egokraftfahrzeugs für das Verfahren berücksichtigt werden, beispielsweise eine Motorraumklappe, eine Tankklappe etc., erhöht sich die Anzahl der Zugangsparameter entsprechend.

Um nun mittels des Verfahrens ein besonders sicheres und besonders effizientes Parken des Egokraftfahrzeugs zu ermöglichen, ist erfindungsgemäß vorgesehen, dass die Parkposition anhand wenigstens eines weiteren Zugangsparameters wenigstens eines weiteren Kraftfahrzeugs, das benachbart zu der designierten bzw. beabsichtigten Parkposition parkt, festgelegt wird.

Hierbei sind die weiteren Zugangsparameter des wenigstens einen weiteren Kraftfahrzeugs analog zu den zuvor beschriebenen Zugangsparameter des Egokraftfahrzeugs ausgebildet.

Demnach wird also mittels der Steuereinheit die Parkposition bestimmt, indem die Steuereinheit den Parkplatzdatensatz, den wenigstens einen Zugangsparameter des Egokraftfahrzeugs sowie den wenigstens einen weiteren Zugangsparameter des benachbart parkenden Kraftfahrzeugs verarbeitet oder weiterverarbeitet. Nochmals anders ausgedrückt wertet die Steuereinheit den Parkplatzdatensatz und die Zugangsparameter des Egokraftfahrzeugs zusammen mit den Zugangsparametern des benachbarten Kraftfahrzeugs aus, um die Parkposition zu ermitteln oder zu bestimmen, anhand derer das Egokraftfahrzeug letztendlich auf den Parkplatz bzw. Querparkplatz geparkt werden soll oder geparkt wird.

Indem bei dem Verfahren nicht nur die Zugangsparameter des Egokraftfahrzeugs sondern darüber hinaus die Zugangsparameter des benachbart parkenden Kraftfahrzeugs berücksichtigt werden, ist ein besonders effizientes und besonders sicheres Parken des Egokraftfahrzeugs gewährleistet, da nicht ausschließlich auf ein besonders einfaches bzw. aufwandsarmes Aussteigen aus dem Egokraftfahrzeug geachtet wird, sondern überdies eine Ausrichtung und/oder eine Öffnungsmöglichkeit von wenigstens einem Klappenelement des benachbart parkenden Kraftfahrzeugs berücksichtigt wird. Hieraus folgt, dass ein besonders einfaches Öffnen des entsprechenden Klappenelements und infolgedessen ein besonders einfaches Einsteigen in das benachbart parkende Kraftfahrzeug gewährleistet wird. Folglich wird mit dem Egokraftfahrzeug besonders effizient geparkt, wobei das benachbart parkende Kraftfahrzeug besonders wenig blockiert wird. Insoweit ist ein Risiko verringert, dass ein Nutzer, insbesondere Fahrer, des benachbart parkenden Kraftfahrzeugs beim Öffnen eines entsprechenden Klappenelements, beispielsweise einer Fahrertür des benachbart parkenden Kraftfahrzeugs, diese in unerwünschter Weise an das Egokraftfahrzeug anschlägt und hierdurch das benachbart parkende Kraftfahrzeug und/oder das Egokraftfahrzeug beschädigt werden/wird. Ferner nimmt der Fahrer des benachbart parkenden Kraftfahrzeugs wahr, dass mittels des Egokraftfahrzeugs besonders rücksichtsvoll geparkt worden ist, wodurch eine Akzeptanz des Egokraftfahrzeugs und infolgedessen des Fahrerassistenzsystems des Egokraftfahrzeugs in vorteilhafter Weise besonders hoch ist. Weiter ist ein Stresslevel bzw. Frustrationslevel des Fahrers des benachbart parkenden Kraftfahrzeugs beim Einsteigen in dasselbe in vorteilhafter Weise besonders gering, wodurch in weiterer Folge, beispielsweise bei einer anschließenden Fahrt mit dem benachbart parkenden Kraftfahrzeug, eine Verkehrssicherheit besonders hoch ist. Denn eine Verkehrssicherheit hängt in besonderem Maße von einem Gemütszustand der (menschlichen) Verkehrsteilnehmer ab.

Es wird zum Bestimmen der Parkposition mittels der Steuereinheit anhand des Parkplatzdatensatzes und anhand der Zugangsparameter, das heißt sowohl anhand des wenigsten einen Zugangsparameters des Egokraftfahrzeugs als auch anhand des wenigstens einen Zugangsparameters des benachbart parkenden Kraftfahrzeugs, eine Ausrichtung einer Vorwärtsfahrtrichtung des Egokraftfahrzeugs in Bezug zu dem Querparkplatz bestimmt. Anders ausgedrückt wird zum Bestimmen der Parkposition mittels der Steuereinheit bestimmt, ob mittels des Egokraftfahrzeugs vorwärts oder rückwärts in/auf den Querparkplatz gefahren wird bzw. gefahren werden soll. Ist der Querparkplatz, auf/in dem mittels des Egokraftfahrzeugs geparkt werden soll, rechtsseitig und linksseitig jeweils direkt durch ein jeweiliges benachbart parkendes Kraftfahrzeugs begrenzt, die beide vorwärts eingeparkt sind, kann mittels des Egokraftfahrzeugs besonders effizient geparkt werden, indem dieses zwischen die beiden benachbart parkenden Kraftfahrzeuge rückwärts eingeparkt wird. Es weisen dann eine Beifahrerseite des Egokraftfahrzeugs und eine Beifahrerseite eines der benachbart parkenden Kraftfahrzeuge aufeinander zu, wodurch eine Fahrerseite des Egokraftfahrzeugs und eine Fahrerseite des entsprechend anderen benachbart parkenden Kraftfahrzeugs aufeinander zuweisen. Hierdurch ist es beispielsweise möglich, einen Abstand zwischen den genannten Beifahrerseiten kleiner zu wählen als einen Abstand zwischen den genannten Fahrerseiten, wodurch in einem Bereich der jeweiligen Fahrertür des Egokraftfahrzeugs und des benachbart parkenden Kraftfahrzeugs besonders viel Raum bzw. Platz vorgehalten wird, sodass sowohl der Fahrer des Egokraftfahrzeugs als auch der Fahrer des entsprechenden benachbart parkenden Kraftfahrzeugs besonders aufwandsarm ein- bzw. aussteigen können.

Erfindungsgemäß hat es sich als vorteilhaft herausgestellt, wenn die Ausrichtung der Vorwärtsfahrtrichtung des Egokraftfahrzeugs in Bezug zu dem Querparkplatz ferner abhängig gemacht wird von einem an den Querparkplatz angrenzenden Straßentyp und/oder einer Komplexität eines zum Fahren auf den Querparkplatz erforderlichen Fahrmanövers und/oder einer Ausrichtung einer Vorwärtsfahrtrichtung des benachbart parkenden Kraftfahrzeugs und/oder einem Beladungszustand eines Laderaums des Egokraftfahrzeugs. Im Zusammenhang mit dem Ausrichten der Vorwärtsfahrtrichtung des Egokraftfahrzeugs in Bezug zu dem Querparkplatz, das heißt ob rückwärts oder vorwärts mittels des Egokraftfahrzeugs auf dem Querparkplatz geparkt wird, ist eine jeweilige Vorzugsausrichtung vorgesehen. Grenzt der Querparkplatz beispielsweise an eine Ortsstraße an, das heißt, wird unter einem Verlassen der Ortsstraße auf den Querparkplatz gefahren, beinhaltet das Bestimmen der Parkposition, dass vorzugsweise rückwärts auf/in den Querparkplatz gefahren wird. Ist das Fahrmanöver, mit dem auf dem Querparkplatz gefahren werden soll, besonders komplex, beispielsweise aufgrund eines besonders hohen Verkehrsaufkommens auf der an den Querparkplatz angrenzenden Straße, kann vorgesehen sein, dass vorwärtsgerichtet auf den Querparkplatz aufgefahren wird, um die Straße möglichst schnell von dem Egokraftfahrzeug zu räumen und in bevorzugter Weise einen Verkehrsfluss auf der Straße möglichst wenig zu behindern. Des Weiteren, und wie bereits vorstehend beschrieben, kann die Ausrichtung der Vorwärtsfahrtrichtung des Egokraftfahrzeugs anhand einer Vorwärtsfahrtrichtung wenigstens eines benachbart parkenden Kraftfahrzeugs oder anhand einer jeweiligen Vorwärtsfahrtrichtung von benachbart parkenden Kraftfahrzeugen ausgesucht werden. Um ein besonders effizientes bzw. aufwandsarmes Entladen oder Beladen des Laderaums des Egokraftfahrzeugs, etwa eines Kofferraums, zu ermöglichen, kann die Ausrichtung der Vorwärtsfahrtrichtung des Egokraftfahrzeugs entsprechend derart bestimmt werden, dass es dem Nutzer des Egokraftfahrzeugs besonders aufwandsarm ermöglicht ist, das entsprechende Klappenelement des Laderaums, beispielsweise den Kofferraumdeckel, zu öffnen bzw. zu schließen und diesen zuvor besonders einfach zu erreichen.

Eine weitere vorteilhafte Ausführungsform des Verfahrens sieht vor, dass zum Bestimmen der Parkposition mittels der Steuereinheit anhand des Parkplatzdatensatzes und anhand der Zugangsparameter - das bedeutet anhand des Zugangsparameters oder den Zugangsparametern des Egokraftfahrzeugs in Verbindung mit dem Zugangsparameter oder den Zugangsparametern des benachbart parkenden Kraftfahrzeugs - ein horizontaler Versatz zwischen einer senkrechten Längsmittenebene des Egokraftfahrzeugs und einer senkrechten Längsmittenebene des Querparkplatzes bestimmt wird. Das bedeutet, dass die Steuereinheit die Parkposition beispielsweise derart bestimmt, dass die senkrechte Längsmittenebene des Egokraftfahrzeugs und die senkrechte Längsmittenebene des Querparkplatzes zusammenfallen, wenn dies aufgrund der durch den Parkplatzdatensatz und die Zugangsparameter charakterisierten Gegebenheiten an dem Querparkplatz möglich ist. In diesem Fall beträgt dann der horizontale Versatz zwischen den Längsmittenebenen Null. Des Weiteren kann mittels der Steuereinheit die Parkposition derart bestimmt werden, dass die senkrechte Längsmittenebene des Egokraftfahrzeugs und die senkrechte Längsmittenebene des Querparkplatzes auseinanderfallen, wenn dies durch wenigstens einen der Zugangsparameter bedingt wird. In diesem Fall ist dann der horizontale Versatz zwischen den Längsmittenebenen ungleich Null, was bedeutet, dass das Egokraftfahrzeug in Bezug zu dem Querparkplatz außermittig geparkt wird, beispielsweise um ein sicheres Ein- bzw. Aussteigen in das bzw. aus dem Egokraftfahrzeug und/oder in das bzw. aus dem benachbart parkenden Kraftfahrzeug zu gewährleisten.

Es ist vorgesehen, wenn basierend auf einer verfügbaren Breite des Querparkplatzes, auf einer Breite des Egokraftfahrzeugs (Egokraftfahrzeugbreite) und auf dem wenigstens einen Zugangsparameter, der eine Offenstellung des Klappenelements charakterisiert, mittels der Steuereinheit der Querparkplatz als ein sicher nutzbarer Querparkplatz, als ein kleiner Querparkplatz, als ein kritischer Querparkplatz oder als ein nicht sicher nutzbarer Querparkplatz kategorisiert wird. Hierbei wird die verfügbare Breite des Querparkplatzes mittels der Sensorik des Egokraftfahrzeugs erfasst bzw. ermittelt, wobei die verfügbare Breite des Querparkplatzes von einer markierten Breite des Querparkplatzes abweichen kann. Denn - wie eingangs bereits erwähnt - können Gegebenheiten an dem Querparkplatz vorliegen, die eine vollständige bzw. vollumfängliche Nutzung des Querparkplatzes zumindest behindern, beispielsweise indem eines der benachbarten Kraftfahrzeuge teilweise auf oder über der Bodenmarkierung des Querparkplatzes parkt. Demnach ist eine Querbreite zwischen den Bodenmarkierungslinien größer als die tatsächlich verfügbare Breite des Querparkplatzes, sodass der Querparkplatz lediglich im Umfang der tatsächlich verfügbaren Breite nutzbar ist. Ragt folglich wenigstens ein Objekt, beispielsweise ein benachbart parkendes Kraftfahrzeug, in den Querparkplatz hinein, auf dem mittels des Egokraftfahrzeugs geparkt werden soll, ist die tatsächlich zum Parken verfügbare Breite des Querparkplatzes durch jenes Objekt verringert. Wird der Querparkplatz rechtsseitig und linksseitig von jeweils einem benachbart parkenden Kraftfahrzeug begrenzt, wird dementsprechend beispielsweise die verfügbare Breite des Querparkplatzes zwischen den über den Querparkplatz voneinander beabstandeten benachbart parkenden Kraftfahrzeugen gemessen. Die Kraftfahrzeugbreite des Egokraftfahrzeugs bzw. die Egokraftfahrzeugbreite ist durch Herstellung des Egokraftfahrzeugs bekannt und beispielsweise in eine Speichereinheit der Steuereinheit bzw. des Fahrerassistenzsystems eingespeichert. Dementsprechend hat die Steuereinheit zum Bestimmen der Parkposition Zugriff auf eine die Egokraftfahrzeugbreite in Datenform charakterisierende Information.

Der wenigstens eine Zugangsparameter des Egokraftfahrzeugs, der zum Kategorisieren des Querparkplatzes herangezogen wird, repräsentiert wenigstens eine Offenstellung einer der Türen des Egokraftfahrzeugs, beispielsweise der Fahrertür. Es bekannt, dass eine Fahrertür eines Kraftfahrzeugs, wenn diese aus einem vollständig geschlossenen Zustand in Richtung hin zu einer vollständigen Offenstellung verschwenkt wird, in einer ersten Raststellung gehalten wird, die durch Aufbringen einer weiteren Öffnungskraft überdrückbar ist, sodass die Fahrertür dann nach Überwinden der ersten Raststellung in einer zweiten Raststellung gehalten wird, welche einen bestimmungsgemäßen Endanschlag in der Offenstellung der Fahrertür darstellt. Mit anderen Worten ist die Fahrertür, um diese vollständig in die Offenstellung zu verstellen, über die erste Raststellung hinaus zu drücken, bis die Fahrertür in der zweiten Raststellung vollständig bzw. bestimmungsgemäß maximal geöffnet ist. Im Zusammenhang mit dem jeweiligen Zugangsparameter des Egokraftfahrzeugs bedeutet das, dass ein erster Zugangsparameter des Egokraftfahrzeugs die Fahrertür in der ersten Raststellung charakterisiert, wohingegen ein zweiter Zugangsparameter, der von dem ersten Zugangsparameter unterschiedlich ist, die Fahrertür in der zweiten Raststellung bzw. im vollständig geöffneten Zustand charakterisiert. Mit der in der jeweiligen Raststellung angeordneten Fahrertür geht ein laterales Raumerfordernis einher, das erforderlich ist, um die Fahrertür bzw. das entsprechende Klappenelement in die entsprechende Raststellung zu verstellen. Mit anderen Worten ist an einer Seite (Fahrerseite bzw. Beifahrerseite) des Egokraftfahrzeus ein erster Abstand vorgesehen, der erforderlich ist, um das entsprechende Klappenelement in die erste Raststellung zu verstellen. Des Weiteren ist auf derselben Seite ein zweiter Abstand vorgesehen, der zum einen größer als der erste Abstand ist und zum anderen erforderlich ist, um das entsprechende Klappenelement in die zweite Raststellung zu verstellen. Es ist ferner an dieser Seite ein Sicherheitsabstand vorgesehen, der kleiner ist als der erste Abstand welcher erforderlich ist, damit das Egokraftfahrzeug, insbesondere das Fahrerassistenzsystem bzw. zumindest teilweise automatische Parklenkassistenzsystem, bestimmungsgemäß funktioniert, um dem Nutzer bzw. Fahrer des Kraftfahrzeugs die Assistenzfunktionen zum Parken, insbesondere das hierin beschriebene Verfahren, bereitzustellen.

Im Laufe des Verfahrens bzw. unter einem Durchführen des Verfahrens wird also der Querparkplatz, auf dem mit dem Egokraftfahrzeug geparkt werden soll, beispielsweise als ein sicher nutzbarer Querparkplatz kategorisiert. Dies ist dann der Fall, wenn

$$B \geq b + 2 \cdot d_2$$

mit

B: verfügbare Breite des Querparkplatzes
b: Egokraftfahrzeugbreite
$d_2$ : zweiter Abstand.

Träfen diese Gegebenheiten auf das geparkte Egokraftfahrzeug im Zusammenhang mit dem Querparkplatz zu, ist es ermöglicht, sowohl auf der Fahrerseite als auch auf der Beifahrerseite des Egokraftfahrzeugs das jeweilige Klappenelement, insbesondere die Fahrertür und die Beifahrertür jeweils maximal weit zu öffnen, das heißt jeweils in die zweite Raststellung zu verstellen. Hierdurch ist ein besonders einfaches und komfortables Ein- bzw. Aussteigen für die Nutzer des Egokraftfahrzeugs gewährleistet.

Der Querparkplatz, auf dem mit dem Egokraftfahrzeug geparkt werden soll, wird hingegen als ein kleiner Querparkplatz kategorisiert, wenn

$$b + 2 \cdot d_2 > B \geq b + 2 \cdot d_1$$

mit $d_1$: erster Abstand.

Das bedeutet, dass die Nutzung des Querparkplatzes zum Parken des Egokraftfahrzeugs zumindest eingeschränkt ist, da es bei diesen Gegebenheiten nicht mehr möglich ist, sowohl die Beifahrertür als auch die Fahrertür jeweils in die zweite Raststellung zu verstellen bzw. vollständig zu öffnen. Es ist jedoch möglich, rechtsseitig und linksseitig des Egokraftfahrzeugs das entsprechende Klappenelement - also die Beifahrertür und die Fahrertür - jeweils in die erste Raststellung zu verstellen, in welcher zwar die jeweilige Tür nicht vollständig geöffnet ist, aber dennoch ein Aussteigen bzw. Einsteigen sichergestellt ist.

Des Weiteren wird der Querparkplatz, auf dem mittels dem Egokraftfahrzeug geparkt werden soll, als ein kritischer Querparkplatz kategorisiert, wenn

$$b + 2 \cdot d_1 > B \geq b + 2 \cdot d_S$$

mit $d_S$: Sicherheitsabstand.

Wird mit dem Egokraftfahrzeug auf einem solchen kritischen Querparkplatz geparkt, ist es beidseitig des Egokraftfahrzeugs nicht mehr möglich, die Beifahrertür bzw. Fahrertür bis in die erste Raststellung zu verstellen. Folglich hätten die Nutzer des Egokraftfahrzeugs die jeweilige Tür zwischen der vollständig geschlossenen Stellung und der ersten Raststellung zu halten, beispielsweise um aus dem Egokraftfahrzeug auszusteigen. Dies ist besonders aufwendig, wodurch ein besonders einfaches Aussteigen aus dem Egokraftfahrzeug nicht gewährleistet ist.

Schließlich ist es weiterhin denkbar, dass der Querparkplatz nicht geeignet ist, das Egokraftfahrzeug sicher zum Parken aufzunehmen. Mit anderen Worten kann bei dem Verfahren der Querparkplatz als nicht sicher nutzbarer Querparkplatz kategorisiert werden. Dies ist dann der Fall, wenn

$$B < b + 2 \cdot d_S$$

Bei dem als nicht sicher nutzbarer Querparkplatz kategorisierten Querparkplatz ist linksseitig wie rechtsseitig des Egokraftfahrzeugs zwar noch jeweils der Sicherheitsabstand $d_S$ gegeben, aber ein Öffnen der Beifahrertür und/oder Fahrertür ist nur noch in so geringem Maße möglich, dass ein sicheres Aussteigen aus dem Egokraftfahrzeug sowie ein sicheres Einsteigen in das Egokraftfahrzeug nicht mehr gewährleistet werden kann.

Es ist für das Verfahren vorteilhaft, die Parkplatzkategorie des Querparkplatzes zu kennen, bevor mit dem Egokraftfahrzeug auf den Querparkplatz aufgefahren und schließlich darauf geparkt wird. Beispielsweise kann die erkannte Kategorie des Querparkplatzes einem Nutzer des Egokraftfahrzeugs, insbesondere dem Fahrer, bereitgestellt werden, etwa über ein Ausgabeeinheit (Display, Lautsprecher etc.), woraufhin dem Fahrer eine Auswahlmöglichkeit bereitgestellt wird, ob tatsächlich auf jenem Querparkplatz geparkt werden soll oder ob eine Parkplatzsuche fortgesetzt werden soll.

Wenn in diesem Zusammenhang der Querparkplatz als ein kleiner Querparkplatz kategorisiert wird, ist es bevorzugt, dass mittels der Steuereinheit die Parkposition derart bestimmt wird, dass an wenigstens einem der Klappenelemente des Egokraftfahrzeugs - also beispielsweise an der Fahrertür oder der Beifahrertür - ein Komfortabstand zu den benachbart parkenden Kraftfahrzeug bereitgestellt wird. Zudem kann optional vorgesehen sein, dass, bevor das Egokraftfahrzeug auf den Parkplatz auffährt, vorgeschlagen wird, dass der Beifahrer und/oder ein (weiterer) Passagier des Egokraftfahrzeugs auf der Beifahrerseite aus dem Egokraftfahrzeug aussteigen/aussteigt. Hierzu kann beispielsweise die Ausgabeeinheit eingesetzt werden. Wenn also auf wenigstens einer Seite des Egokraftfahrzeugs der Komfortabstand - bei welchem es sich um den zweiten Abstand handelt - bereitgestellt wird, ist es selbst bei einem zumindest teilweise eingeschränkt nutzbaren Querparkplatz zumindest für den Fahrer und/oder Passagiere auf der Fahrerseite des Egokraftfahrzeugs ermöglicht, das sprechende Klappenelement in die zweite Raststellung zu verstellen, um infolgedessen besonders komfortabel aus dem Egokraftfahrzeug auszusteigen.

Wenn der Querparkplatz als ein kritischer Querparkplatz kategorisiert wird, ist es bevorzugt, dass mittels der Steuereinheit die Parkposition derart bestimmt wird, dass an wenigstens einem der Klappenelemente des Egokraftfahrzeugs ein Mindestabstand, bei welchem es sich um den ersten Abstand handelt, zu den benachbart parkenden Kraftfahrzeugen bereitgestellt wird. Hierbei kann optional vorgeschlagen werden, dass, bevor das Egokraftfahrzeug auf den kritischen Querparkplatz fährt, der Beifahrer und/oder Passagiere auf der Beifahrerseite des Egokraftfahrzeugs aus dem Egokraftfahrzeug aussteigen/aussteigt. Ist also der Querparkplatz noch weiter eingeschränkt, sodass es sich bei dem Querparkplatz nicht mehr um einen kleinen Querparkplatz sondern um einen kritischen Querparkplatz handelt, dessen verfügbare Breite kleiner als bei einem kleinen Querparkplatz ist, ist es dann zumindest dem Fahrer des Egokraftfahrzeugs und/oder Passagieren auf einer Fahrerseite des Egokraftfahrzeugs ermöglicht, das entsprechende Klappenelement bzw. die Fahrertür oder eine von der Fahrertür unterschiedliche und auf der Fahrerseite Egokraftfahrzeugs angeordnete Tür des Egokraftfahrzeugs in die erste Raststellung zu verstellen. Hierdurch ist unter effizienter Ausnutzung eines Parkraums weiterhin gewährleistet, dass zumindest der Fahrer aus dem Egokraftfahrzeug aussteigen kann, wenn das Egokraftfahrzeug anhand der Parkposition auf dem kritischen Querparkplatz angeordnet worden ist.

Die Sensorik, mittels derer der Querparkplatz zumindest teilweise erfasst wird, um den Parkplatzdatensatz bereitzustellen, weist in weiterer Ausgestaltung zwei voneinander unterschiedlich ausgebildete Sensoreinheiten auf. Das bedeutet für das Verfahren, das zum Erfassen des Querparkplatzes die zwei voneinander unterschiedlich ausgebildeten Sensoreinheiten der Sensorik eingesetzt werden, wobei eine erste dieser Sensoreinheiten eine den Querparkplatz definierende Bodenmarkierung erfasst und eine von der ersten Sensoreinheit unterschiedlich ausgebildete zweite dieser Sensoreinheiten ein Freivolumen des Querparkplatzes erfasst. Demnach handelt es sich bei der ersten Sensoreinheit um eine Sensoreinheit, mittels derer eine Parkmarkierungserkennung durchführbar ist oder durchgeführt wird. Dementsprechend handelt es sich bei der zweiten Sensoreinheit um eine Sensoreinheit, mittels derer eine Freivolumenerkennung ausführbar ist oder ausgeführt wird. Beispielsweise handelt es sich bei der Sensoreinheit zur Parkmarkierungserkennung um ein kamerabasiertes Sensorsystem, mittels dessen die Bodenmarkierungen bzw. Parkmarkierungen erfasst werden und ein die Bodenmarkierung bzw. Parkmarkierung charakterisierender Referenzdatensatz der Steuereinheit bereitgestellt wird. Bei der Sensoreinheit zur Freivolumenerkennung handelt es sich beispielsweise um ein Radarsensorsystem, dass das Freivolumen des Querparkplatzes erfasst und der Steuereinheit einen den Querparkplatz teilweise charakterisierenden Freivolumendatensatz bereitstellt. Das Freivolumen des Querparkplatzes ist ein von Objekten, etwa Fahrzeugen, Säulen und/oder anderen festen Gegenständen, freies Volumen des Querparkplatzes. Das Freivolumen bzw. freie Volumen des Querparkplatzes ist über einer Bodenfläche des Querparkplatz angeordnet, also nach unten hin durch die Bodenfläche des Querparkplatzes begrenzt.

Der Freivolumendatensatz und der Referenzdatensatz werden, beispielsweise mittels der Sensorik, datentechnisch miteinander kombiniert bzw. miteinander verknüpft und insbesondere zu dem Parkplatzdatensatz weiterverarbeitet oder mit den Parkplatzdatensatz datentechnisch verknüpft. Mit anderen Worten wird der Steuereinheit mittels der Sensorik basierend auf dem Referenzdatensatz und dem Freivolumendatensatz der Parkplatzdatensatz bereitgestellt und infolgedessen mittels der Steuereinheit eine entsprechende Parkposition ermittelt, die ein sicheres Parken des Egokraftfahrzeugs auf dem Querparkplatz charakterisiert.

Indem zum Erfassen des Querparkplatzes zwei voneinander unterschiedlich ausgebildete Sensoreinheiten zum Einsatz kommen, ist eine besonders zuverlässige Erkennung des tatsächlich freien Volumens des Querparkplatzes gewährleistet, wobei die Bodenmarkierung des Querparkplatzes bzw. die Parkmarkierung als Referenz für den Parkplatzdatensatz dient. Hierdurch ist ein Parkvorgang anhand des Verfahrens für den Nutzer des Egokraftfahrzeugs besonders intuitiv, da bei einem nicht unterstützten Parken der (menschliche) Fahrer des Egokraftfahrzeugs die Parkmarkierung bzw. Bodenmarkierung des Querparkplatzes ebenfalls als Referenz für den Parkvorgang nutzt.

Liegen das Freivolumen, welches vereinfacht

ine rechteckige Grundfläche auf der Bodenfläche des Querparkplatzes aufweist, und die beispielsweise rechteckige Parkmarkierung abweichend vom Idealfall schräg aufeinander, ändert sich je nach Lage des Freivolumens der tatsächlich zum Parken nutzbare Raum des Querparkplatzes. Dies kann beispielsweise dadurch der Fall sein, dass wenigstens ein benachbart zu dem Querparkplatz parkendes Kraftfahrzeug, insbesondere die beiden zu dem Querparkplatz benachbarten Kraftfahrzeuge, auf deren (Quer-)Parkplätzen schräg stehen, wodurch ein Einfahren auf den Querparkplatz behindert sein kann. Des Weiteren ergibt sich aufgrund der Schrägstellung der benachbart parkenden Kraftfahrzeuge entlang einer Längsrichtung des Querparkplatzes und/oder entlang der Vorwärtsfahrtrichtung des Egokraftfahrzeugs, dass unterschiedliche Abstände zwischen den Egokraftfahrzeug und dem jeweiligen benachbart parkenden Kraftfahrzeug vorliegen. In diesem Zusammenhang ist bei dem Verfahren vorgesehen, dass die verfügbare Breite des Querparkplatzes zwischen den Punkten der benachbart parkenden Kraftfahrzeugen in Bezug zu einer Querrichtung des Querparkplatzes gemessen wird, die aufgrund der Schrägstellung der benachbarten Kraftfahrzeuge am nächsten zueinander angeordnet sind.

Alternativ oder zusätzlich kann vorgesehen sein, dass die verfügbare Breite des Querparkplatzes lediglich auf Höhe der Fahrertür des Egokraftfahrzeugs bestimmt wird. Beim Bestimmen der Parkposition durch die Steuereinheit wird dann von dieser berücksichtigt, dass abseits der Fahrertür des Egokraftfahrzeugs ein engerer Abstand zwischen einem der benachbarten Kraftfahrzeuge und dem Egokraftfahrzeug vorhanden sein kann.

Die Erfindung betrifft des Weiteren ein Fahrerassistenzsystem, das insbesondere als ein zumindest teilautomatisches Parklenkassistenzsystem ausgebildet ist. Das Fahrerassistenzsystem bzw. das zumindest teilautomatische Parklenkassistenzsystem ist dazu ausgebildet, das Verfahren gemäß der vorstehenden Beschreibung durchzuführen. Das bedeutet, dass das Fahrerassistenzsystem Mittel aufweist, die dazu konfiguriert sind, Verfahrensschritte des oben angegebenen Verfahrens durchzuführen.

Zu der Erfindung gehören auch Weiterbildungen des erfindungsgemäßen Fahrerassistenzsystems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Fahrerassistenzsystems hier nicht noch einmal beschrieben.

Schließlich betrifft die Erfindung ein Kraftfahrzeug, insbesondere eine Personenkraftwagen, der ein vorstehend beschriebenes Fahrerassistenzsystem aufweist.

Zu der Erfindung gehören auch Weiterbildungen des erfindungsgemäßen Kraftfahrzeugs, die Merkmale aufweisen, wie sie bereits im Zusammenhang mit den Weiterbildungen des erfindungsgemäßen Verfahrens bzw. des erfindungsgemäßen Fahrerassistenzsystems beschrieben worden sind. Aus diesem Grund sind die entsprechenden Weiterbildungen des erfindungsgemäßen Kraftfahrzeugs hier nicht noch einmal dargelegt.

Die Erfindung umfasst auch die Kombinationen der Merkmale der beschriebenen Ausführungsformen.

Im Folgenden ist ein Ausführungsbeispiel der Erfindung beschrieben. Hierzu zeigt:

Fig. 1    eine schematische Ansicht einer Parkfläche, die zumindest drei Querparkplätze aufweist, wovon ein leerer der Querparkplätze rechtsseitig und linksseitig von jeweils einem benachbart parkenden Kraftfahrzeug begrenzt ist, wobei mittels eines Egokraftfahrzeugs auf den leeren Querparkplatz gefahren werden soll;

Fig. 2    eine schematische Ansicht von vier Parksituationen, anhand derer eine Vorwärtsfahrtrichtung des Egokraftfahrzeugs in Bezug zu dem Querparkplatz ausgerichtet wird;

Fig. 3    eine schematische Ansicht des auf dem Querparkplatz parkenden Egokraftfahrzeugs, wobei eine Längsmittenebene des Egokraftfahrzeugs und eine Längsmittenebene des Querparkplatzes auseinanderfallen;

Fig. 4    eine schematische Ansicht des Egokraftfahrzeugs zur Verdeutlichung von für das Parken relevanten Abständen;

Fig. 5    ein Flussidagramm zur Verdeutlichung von Verfahrensschritten eines Verfahrens zum Bestimmen einer Parkposition für das Egokraftfahrzeug und

Fig. 6    eine schematische Ansicht des Querparkplatzes, der mittels zweierlei Sensoreinheiten erfasst wird.

Bei dem im Folgenden erläuterten Ausführungsbeispiel handelt es sich um eine bevorzugte Ausführungsform der Erfindung.

In den Figuren sind funktionsgleiche Elemente jeweils mit denselben Bezugszeichen versehen. Im Folgenden werden ein Verfahren zum Bestimmen einer Parkposition 1 für ein Kraftfahrzeug 2, das im Folgenden als Egokraftfahrzeug 2 bezeichnet wird, ein Fahrerassistenzsystem 3 zum Durchführen des Verfahrens sowie das Egokraftfahrzeug 2 an sich gemeinsam beschrieben.

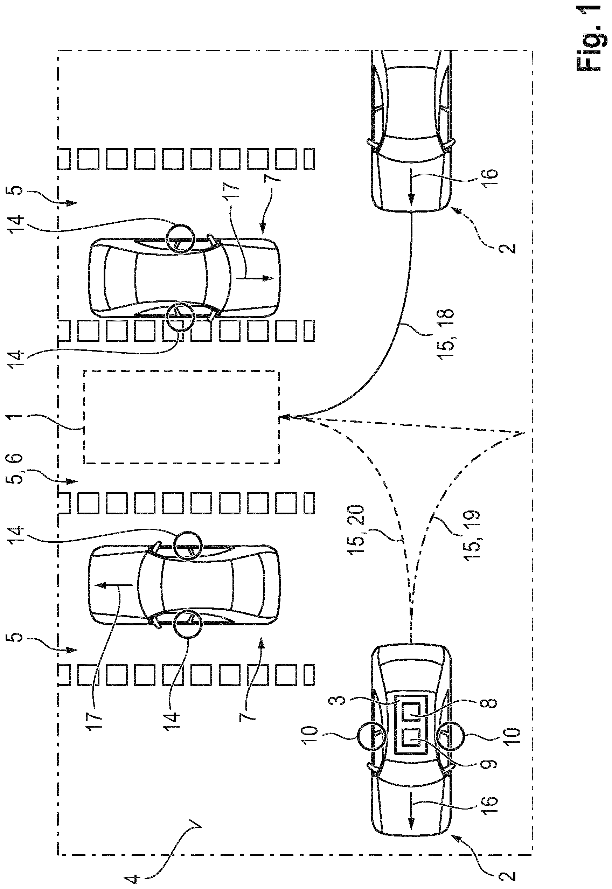

Hierzu zeigt Fig. 1 in einer schematischen Ansicht eine Parkfläche 4, die zumindest drei Querparkplätze 5 aufweist, wovon ein leerer (mit Bezugszeichen 6 bezeichneter) der Querparkplätze 5 rechtsseitig und linksseitig von jeweils einem direkt benachbart parkenden Kraftfahrzeug 7 begrenzt ist. Auf den Querparkplatz 6 soll mittels des Egokraftfahrzeugs 2 gefahren werden, um das Egokraftfahrzeug 2 auf den/dem Querparkplatz 6 zu parken. Hierzu wird mittels einer Sensorik 8 bzw. mittels des die Sensorik 8 aufweisenden Fahrerassistenzsystems 3 die Parkposition 1 ermittelt. Anhand der ermittelten bzw. zu ermittelnden Parkposition 1 soll das Egokraftfahrzeug 2 in/auf dem Querparkplatz 6 ausgerichtet bzw. positioniert werden. Hierzu wird mittels der Sensorik 8 des Egokraftfahrzeugs 2 der Querparkplatz 6 zumindest teilweise erfasst und ein den Querparkplatz 6 zumindest teilweise charakterisierender Parkplatzdatensatz erzeugt und einer Steuereinheit 9 des Egokraftfahrzeugs 2, insbesondere des Fahrerassistenzsystems 3, bereitgestellt. Das bedeutet, dass es sich bei der Steuereinheit 9 um eine Steuereinheit des Fahrerassistenzsystems 3 handeln kann. Beim Erfassen des Querparkplatzes 6 mittels der Sensorik 8 werden Gegebenheiten erfasst, die sich an oder in dem Querparkplatz 6 auswirken. Beispielsweise wird mittels der Sensorik 8 eine Breite und eine Tiefe des Querparkplatzes 6 erfasst und/oder ob der Querparkplatz 6 durch wenigstens ein Objekt beschränkt ist, das heißt ob der Querparkplatz 6 durch das Objekt nicht vollumfänglich bzw. vollständig nutzbar ist.

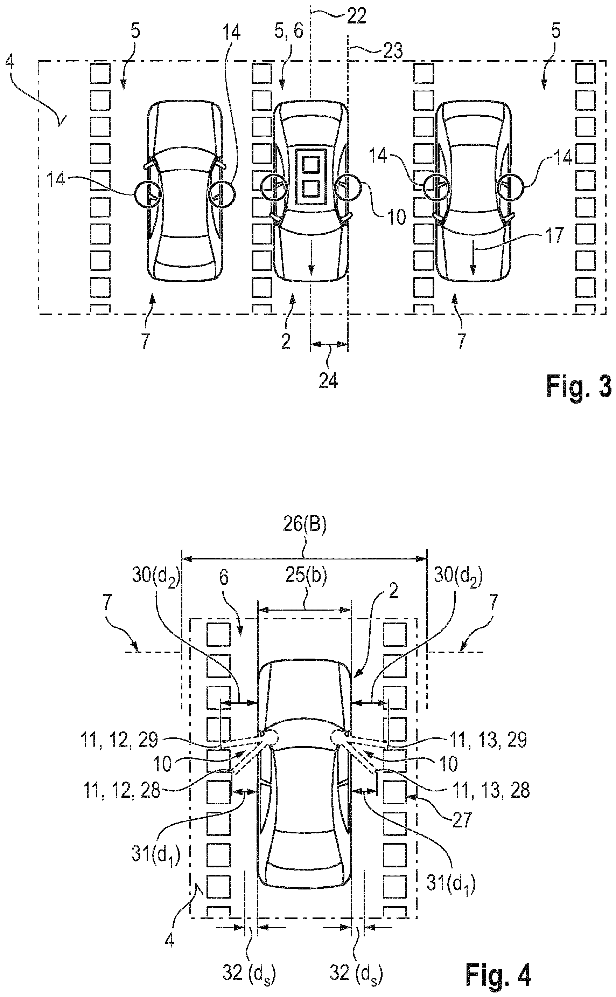

Bei dem Verfahren zum Bestimmen der Parkposition 1 für das Egokraftfahrzeug 2 werden des Weiteren Zugangsparameter 10 des Egokraftfahrzeugs 2 berücksichtigt. Das bedeutet, dass die Zugangsparameter 10 in Datenform der Steuereinheit 9 bereitgestellt werden, beispielsweise mittels einer Speichereinheit der Steuereinheit 9 vorab gespeichert werden. Die Zugangsparameter 10 des Egokraftfahrzeugs 2 charakterisieren eine jeweilige Öffnungsmöglichkeit von Kappenelementen 11 (siehe Fig. 4) des Egokraftfahrzeugs 2. Bei dem jeweiligen Klappenelement 11 handelt es sich beispielsweise um eine Fahrertür 12 des Egokraftfahrzeugs 2 oder um eine Beifahrertür 13 des Egokraftfahrzeugs 2. Es ist bekannt, dass ein Kraftfahrzeug - und somit das Egokraftfahrzeug 2 - mehr Klappenelemente 11 aufweisen kann, wobei das Verfahren dann auf diese weiteren Klappenelemente analog Anwendung findet. Das bedeutet, dass im Folgenden zwar lediglich auf die Fahrertür 12 und die Beifahrertür 13 eingegangen wird, diese jedoch lediglich stellvertretend bzw. beispielhaft für jedes Klappenelement des Egokraftfahrzeug 2 stehen.

Um ein besonders sicheres und besonders effizientes Parken des Egokraftfahrzeugs 2 zu ermöglichen, werden der Steuereinheit 9 weitere Zugangsparameter 14 bereitgestellt, die ebenfalls zum Bestimmen der Parkposition 1 für das Egokraftfahrzeug 2 in das Verfahren einfließen. Das bedeutet, dass der Steuereinheit 9 zum Bestimmen der Parkposition 1 der Parkplatzdatensatz, die Zugangsparameter 10 sowie die weiteren Zugangsparameter 14 bereitgestellt werden. Die Steuereinheit 9 bildet dann basierend auf den Zugangsparametern 10, 14 und dem Parkplatzdatensatz die Parkposition 1, die die Ausrichtung und/oder Positionierung des Egokraftfahrzeugs 2 repräsentiert, bevor das Egokraftfahrzeug 2 letztendlich in/auf dem Querparkplatz 6 geparkt worden ist. Mit anderen Worten bildet die Parkposition 1 eine Zielausrichtung bzw. Zielpositionierung für das Egokraftfahrzeug 2, das - insbesondere mithilfe des Fahrerassistenzsystems 3 - gemäß der bestimmten bzw. ermittelten Parkposition 1 auf/in den Querparkplatz 6 fährt. Hierbei ist insbesondere vorgesehen, dass das Fahrerassistenzsystem 3, welches insbesondere als ein zumindest teilweise automatisches Parklenkassistenzsystem ausgebildet ist, das Egokraftfahrzeug 2 entlang einer Parkfahrtrajektorie 15 auf/in den Querparkplatz 6 führt. Besonders bevorzugt ist es, wenn das Egokraftfahrzeug 2 mittels des Fahrerassistenzsystems 3 bzw. Parklenkassistenzsystems teilautomatisch, vollautomatisch oder autonom zum Parken auf den Querparkplatz 6 fährt, also das Parken durchführt.

Die weiteren Zugangsparameter 14 sind den weiteren Kraftfahrzeugen 7 zugeordnet, die benachbart zu der Parkposition 1 parken und infolgedessen auf einem jeweiligen jeweils direkt an den Querparkplatz 6 angrenzenden Querparkplatz 5 stehen bzw. geparkt worden sind. Die weiteren Zugangsparameter 14 charakterisieren eine Öffnungsmöglichkeit wenigstens eines Klappenelements des benachbart parkenden Kraftfahrzeugs 7 und sind jeweils analog zu den Zugangsparametern 10 des Egokraftfahrzeugs 2 ausgebildet. Um die Zugangsparameter 14 in das Verfahren zum Bestimmen der Parkposition 1 einfließen lassen zu können, werden die weiteren Zugangsparameter 14 der Steuereinheit 9 bereitgestellt, beispielsweise mittels der Sensorik 8 des Egokraftfahrzeugs 2 erfasst. Beispielsweise charakterisieren die weiteren Zugangsparameter 14, ob eine jeweilige Fahrertür oder eine jeweilige Beifahrertür der entsprechend benachbart parkenden Kraftfahrzeuge 7 dem Querparkplatz 6 zugewandt ist. In Fig. 1 sind aufgrund der positionellen Ausrichtung der benachbart parkenden Kraftfahrzeuge 7 auf den entsprechenden Querparkplätzen 5 jeweilige Beifahrertüren der benachbart parkenden Kraftfahrzeuge 7 dem Querparkplatz 6 zugewandt, auf welchen mittels des Egokraftfahrzeugs 2 anhand des Verfahrens gefahren werden soll.

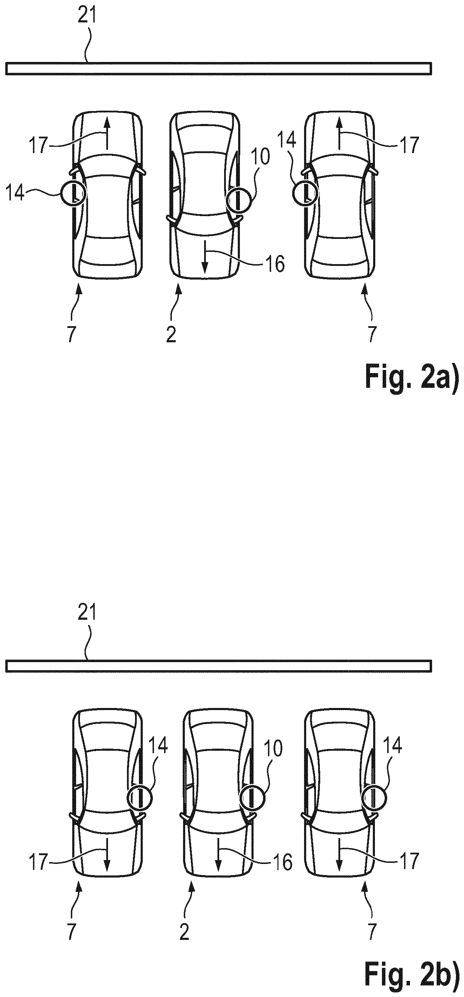

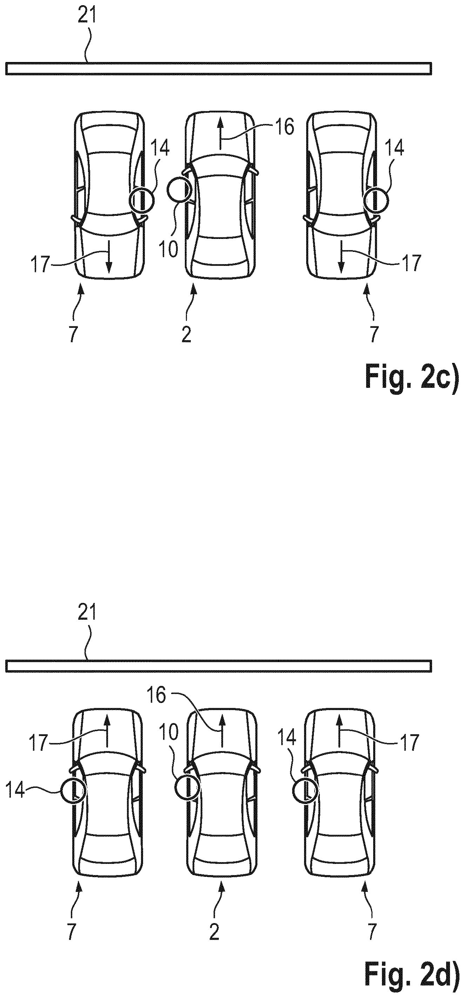

Fig. 2 zeigt in schematischer Ansicht 4 Parksituationen a), b), c) und d), anhand derer eine Vorwärtsfahrtrichtung 16 des Egokraftfahrzeugs 2 in Bezug zu dem jeweiligen Querparkplatz 6 ausgerichtet wird. Anhand einer jeweiligen positionellen Anordnung der Zugangsparameter 10, 14, die in Fig. 2 eine Lage eine jeweiligen Fahrertür 12 des Egokraftfahrzeugs 2 und einer jeweiligen Fahrertür der benachbart parkenden Kraftfahrzeuge 7 charakterisiert, wird insbesondere im Zusammenhang mit den Parksituationen b), c) und d) deutlich, wie eine jeweilige Ausrichtung der Vorwärtsfahrtrichtung 16 des Egokraftfahrzeug 2 in Bezug zu dem jeweiligen Querparkplatz 6 und/oder Bezug zu den benachbart parkenden Kraftfahrzeugen 7 auf einen besonders komfortablen bzw. aufwandsarm Zugang zu der jeweiligen Fahrertür 12 des Egokraftfahrzeugs 2 und/oder zu der jeweiligen Fahrertür der benachbart parkenden Kraftfahrzeuge 7 Einfluss hat. So ist bei gemeinsamer Ausrichtung der Vorwärtsfahrtrichtungen 16, 17 ein jeweils konstanter Abstand zwischen den benachbart parkenden Kraftfahrzeugen 7 und dem Egokraftfahrzeug 2 ermöglicht, wohingegen - siehe Parksituationen a) und c) - in vorteilhafter Weise besonders viel Platz an den Fahrertüren bereitgestellt werden kann. Im Zusammenhang mit der Parksituation a) wird dies besonders deutlich, wobei das Egokraftfahrzeug 2 auf dem Querparkplatz 6 außermittig geparkt worden ist, um den besonders großzügigen Raum zwischen dem in Fig. 2 rechts angeordneten der benachbart parkenden Kraftfahrzeuge 7 und dem Egokraftfahrzeug 2 bereitzustellen.

Ferner kann das jeweilige Ausrichten der Vorwärtsfahrtrichtung 16 des Egokraftfahrzeugs 2 in Bezug zu dem Querparkplatz 6 anhand eines Typs einer Straße, von welcher aus der Querparkplatz 6 direkt befahren wird, bestimmt werden. Das bedeutet, dass der Querparkplatz 6 und die Straße derart aneinander angrenzen, dass unter einem Verlassen der Straße direkt oder unmittelbar auf den Querparkplatz 6 gefahren wird bzw. gefahren werden kann. So kann eine Ausrichtung der Vorwärtsfahrtrichtung 16 und infolgedessen die Parkposition 1 in dem Querparkplatz 6 davon abhängen, ob die Straße, an welche der Querparkplatz 6 angrenzt, eine Bundesstraße ist, eine Autobahn ist, eine Ortsstraße ist, eine lediglich dem Parkplatzverkehr dienende Straße ist etc. Unter erneuter Bezugnahme auf Fig. 1 kann des Weiteren die Ausrichtung der Vorwärtsfahrtrichtung 16 beim Parken des Egokraftfahrzeugs 2 bzw. zum Bestimmen der Parkposition 1 des Egokraftfahrzeugs 2 davon abhängig gewählt werden, wie hoch eine Komplexität eines zum Einparken auf den Querparkplatz 6 erforderlichen Fahrmanöver ist. Ein solches Fahrmanöver ist beispielsweise durch die Parkfahrtrajektorie 15 charakterisiert, die unterschiedlich ausgeprägt sein kann, je nachdem, welche Gegebenheiten in der Umgebung des Egokraftfahrzeugs 2 bzw. des Querparkplatzes 6 herrschen, beispielsweise je nach einer Verkehrssituation bzw. Verkehrsdichte. Besteht beispielsweise der Bedarf, die an den Querparkplatz 6 angrenzende Straße besonders schnell zu räumen, um einen Verkehrsfluss auf dieser Straße aufrecht zu erhalten, kann anhand einer ersten Parkfahrtrajektorie 18 in die Parkposition 1 bzw. in den Querparkplatz 6 eingefahren werden. Herrscht wenig dichter Verkehr, kann anhand einer zweiten Parkfahrtrajektorie 19 in die Parkposition 1 und infolgedessen in den Querparkplatz 6 eingefahren werden, wobei die zweite Parkfahrtrajektorie 19 und die erste Parkfahrtrajektorie 18 sich insbesondere dadurch unterscheiden, dass die zweite Parkfahrtrajektorie 19 wenigstens einen weiteren Zug aufweist, da zunächst mittels des Egokraftfahrzeugs 2 zurückzusetzen ist, um hiernach vorwärts auf den Querparkplatz 6 aufzufahren. Des Weiteren ist eine dritte Parkfahrtrajektorie 20 denkbar, anhand derer das Egokraftfahrzeug 2 in einem Zug rückwärts in den Querparkplatz 6 hineinfährt, was ebenfalls die Möglichkeit erfordert, auf der an den Querparkplatz 6 angrenzenden Straße zurückzusetzen, was beispielsweise durch eine besonders hohe Verkehrsbelastung auf der Straße verhindert oder zumindest besonders aufwendig oder komplex sein kann.

Weiter kann das Ausrichten der Vorwärtsfahrtrichtung 16 des Egokraftfahrzeugs 2 in Bezug zu dem Querparkplatz 6 anhand der jeweiligen Ausrichtung der Vorwärtsfahrtrichtung 17 des jeweiligen benachbart parkenden Kraftfahrzeugs 7 bestimmt werden. So ist es beispielsweise denkbar, dass eine jeweilige Ausrichtung der Vorwärtsfahrtrichtung 17 der benachbart parkenden Kraftfahrzeuge 7 berücksichtigt wird, indem das Egokraftfahrzeug 2 gemäß einer Mehrheit der im Umfeld des Querparkplatzes 6 parkenden Kraftfahrzeuge 7 auf den Querparkplatz 6 ausgerichtet wird. Mit anderen Worten wird mittels der Steuereinheit 9 die Parkposition 1 derart bestimmt, dass die Vorwärtsfahrtrichtung 16 des Egokraftfahrzeugs 2 auf dem Querparkplatz 6 einer mehrheitlichen Ausrichtung der jeweiligen Vorwärtsfahrtrichtungen 17 der benachbart parkenden Kraftfahrzeuge 7 entspricht.

In Fig. 2 ist bei den Parksituationen a), b), c) und d) ein jeweiliges Wandelement 21 eingezeichnet, welches einen Zugang zu einer Laderaumklappe des Egokraftfahrzeugs 2 zumindest erschwert - siehe Parksituation a) und b). Demgemäß ist es sinnvoll, die Ausrichtung der Vorwärtsfahrtrichtung 16 des Kraftfahrzeugs 2 basierend darauf zu bestimmen, ob ein Nutzer des Egokraftfahrzeugs 2 Zugang zum Laderaum des Egokraftfahrzeugs 2 benötigt. Ist dies der Fall, ist bei dem Verfahren vorgesehen, dass die Steuereinheit 9 die Parkposition 1 derart bestimmt, dass die Vorwärtsfahrtrichtung 16 des Egokraftfahrzeugs 2 in Richtung hin zu dem entsprechenden Wandelement 21 weist, sodass das Klappenelement des Laderaums des Egokraftfahrzeugs 2 besonders einfach zugänglich ist.

Fig. 3 zeigt in schematischer Ansicht das auf dem Querparkplatz 6 parkende Egokraftfahrzeug 2, wobei eine Längsmittenebene 22 des Egokraftfahrzeugs 2 und eine Längsmittenebene 23 des Querparkplatzes 6 auseinanderfallen. Mit anderen Worten ist mittels der Steuereinheit 9 die Parkposition 1 derart bestimmt bzw. ermittelt worden, dass mittels des Egokraftfahrzeugs 2 auf dem Querparkplatz 6 außermittig geparkt worden ist. Wieder anders ausgedrückt hat das Egokraftfahrzeug 2 die Parkposition 1 auf dem Querparkplatz 6 eingenommen, wobei die Parkposition 1 in Bezug zu einer Querrichtung des Querparkplatzes 6 außermittig angeordnet worden ist. Die Längsmittenebenen 22, 23 sind also über einen horizontalen Versatz 24 voneinander beabstandet, jedoch (weiterhin) parallel zueinander angeordnet. Beide Längsmittenebenen 22, 23 stehen senkrecht auf der Parkfläche 4, die die Querparkplätze 5, 6 aufweist bzw. beinhaltet.

In Zusammenschau der Fig. 3 mit Fig. 2 - Parksituation a) und c) - wird die Motivation, außermittig zu parken, hinsichtlich der Zugangsparameter 10, 14 besonders deutlich: Da das in Fig. 3 rechts dargestellte Kraftfahrzeug 7 besonders nah an dem Querparkplatz 6 geparkt worden ist, wäre ein Platz auf der Fahrerseite des Egokraftfahrzeugs 2 zum Öffnen der Fahrertür 12 besonders gering, wenn mit dem Egokraftfahrzeug 2 mittig auf dem Querparkplatz 6 geparkt worden wäre. Fielen also die Längsmittenebenen 22, 23 zusammen, das heißt, wäre der Versatz 24 zwischen den Längsmittenebenen 22, 23 gleich Null, wäre ein Aussteigen des Fahrers aus dem Egokraftfahrzeug 2 zumindest behindert, da ein Abstand zwischen der Fahrerseite des Egokraftfahrzeugs 2 und der Beifahrerseite des rechts dargestellten Kraftfahrzeugs 7 in nachteiliger Weise besonders klein wäre. Dem wird bei dem Verfahren dadurch entgegengetreten, dass die Parksituation 1, bevor das Egokraftfahrzeug 2 auf den Querparkplatz 6 fährt, derart bestimmt bzw. ermittelt wird, dass die Längsmittenebenen 22, 23 - wie dargelegt - auseinanderfallen. Hierdurch herrscht zwischen dem Egokraftfahrzeug 2 und dem rechts dargestellten der benachbart parkenden Kraftfahrzeuge 7 genug Platz, damit der Fahrer des Egokraftfahrzeugs 2 die Fahrertür 12 bestimmungsgemäß weit genug öffnen kann, um besonders aufwandsarm, das heißt komfortabel, aussteigen kann.

Zur Verdeutlichung der für das Parken des Egokraftfahrzeugs 2 relevanten Abstände zeigt Fig. 4 eine schematische Ansicht des Egokraftfahrzeugs 2. Das Egokraftfahrzeug 2 weist die Egokraftfahrzeugbreite b auf, die in Fig. 4 das Bezugszeichen 25 trägt. Die verfügbare Breite B des Querparkplatzes 6 (Bezugszeichen 26) wird im vorliegenden Beispiel zwischen den benachbart parkenden Kraftfahrzeugen 7 gemessen, die in Fig. 4 lediglich angedeutet sind. Wird zum Parken mit dem Egokraftfahrzeug 2 der Querparkplatz 6 ausgewählt, wobei rechtsseitig und linksseitig des Querparkplatzes 6 kein den Querparkplatz 6 begrenzendes Objekt, das heißt beispielsweise kein benachbart parkendes Kraftfahrzeug 7, vorhanden ist, kann alternativ vorgesehen sein, dass die verfügbare Breite 26 (B) zwischen einer den Querparkplatz 6 definierenden Bodenmarkierung bzw. Parkmarkierung 27 gemessen wird. Bei der Bodenmarkierung 27 handelt es sich insbesondere um eine Farbmarkierung auf der Parkfläche 4, um die Querparkplätze 5, 6 optisch voneinander abzugrenzen, sodass sich der Fahrer des jeweils zu parkenden Kraftfahrzeugs 2, 7 an der Bodenmarkierung 27 orientieren kann.

Wie bereits weiter oben dargelegt, weist das Egokraftfahrzeug 2 die Klappenelemente 11 auf, wobei auf die Fahrertür 12 und auf die Beifahrertür 13 bezuggenommen wird. Die Türen 12, 13 des Egokraftfahrzeugs 2 sind in eine jeweilige erste Raststellung 28 und in eine jeweilige zweite Raststellung 29 verstellbar. In den jeweiligen Raststellungen 28, 29 steht das entsprechende Klappenelement 11 unter Ausbildung eines Abstands zwischen der entsprechenden Seite des Egokraftfahrzeugs 2 und einer jeweiligen Außenkante des entsprechenden Klappenelements 11 von dem Egokraftfahrzeug 2 ab. Hierbei ist (erklärt am Beispiel der Fahrertür 12) in der zweiten Raststellung 29 der Fahrertür 12 an der Fahrerseite des Egokraftfahrzeugs 2 zwischen der Außenkante der Fahrertür 12 und dem Egokraftfahrzeug 2 der zweite Abstand $d_2$ bzw. der Komfortabstand ausgebildet, der in Fig. 4 das Bezugszeichen 30 hat.

Ist hingegen das jeweilige Klappenelement 11 in die erste Raststellung 28 verstellt, bedeutet das (ebenfalls wieder am Beispiel der Fahrertür 12 erklärt), dass zwischen der Fahrerseite des Egokraftfahrzeugs 2 und der Außenkante der Fahrertür 12 der erste Abstand $d_1$, der als Mindestabstand (Bezugszeichen 31) bezeichnet wird, ausgebildet ist.

In welche der jeweiligen Raststellungen 28, 29 das entsprechende Klappenelement 11 - also beispielsweise die Fahrertür 12 und/oder die Beifahrertür 13 - verstellt wird bzw. verstellbar ist, wird durch die Zugangsparameter 10 des Egokraftfahrzeugs 2 charakterisiert. Mit anderen Worten charakterisieren die Zugangsparameter 10 ein Vermögen des jeweiligen Klappenelements 11, in die jeweilige Raststellung 28, 29 verstellt zu werden. Infolgedessen ist durch die Zugangsparameter 10 charakterisiert, welcher der Abstände 30, 31 zwischen der entsprechenden Seite des Egokraftfahrzeugs 2 und der entsprechenden Außenkante des jeweiligen Klappenelements 11 ausgebildet wird, wenn das jeweilige Klappenelement 11 in die erste Raststellung 28 oder in die zweite Raststellung 29 verstellt wird.

Zum sicheren Einparken des Egokraftfahrzeugs 2 - insbesondere mittels des zumindest teilautomatischen Parklenkassistenzsystems - wird rechtsseitig wie linksseitig des Egokraftfahrzeugs 2 jeweils der Sicherheitsabstand $d_S$ (Bezugszeichen 32) festgelegt, der erforderlich ist, damit das Egokraftfahrzeug 2 sicher in den Querparkplatz 6 einfahren kann.

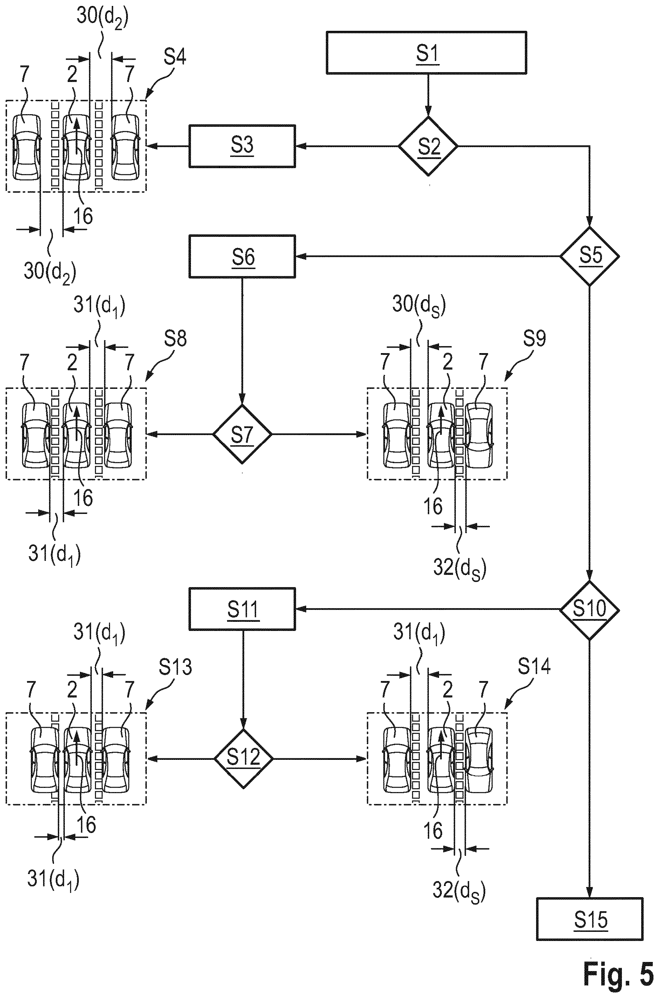

Fig. 5 zeigt zur Verdeutlichung der Verfahrensschritte des Verfahrens zum Bestimmen der Parkposition 1 für das Egokraftfahrzeug 2 ein Flussdiagramm. In einem ersten Verfahrensschritt S1 wird mittels der Sensorik 8 der Querparkplatz 6 erfasst, insbesondere die Maße des Querparkplatzes 6 aufgenommen (siehe Fig. 4). Mit anderen Worten weist dann der Parkplatzdatensatz Abmessungen des Querparkplatzes 6 auf, beispielsweise die verfügbare Breite 26 (B). Der Parkplatzdatensatz wird sodann mittels der Steuereinheit 9 weiterverarbeitet, vorliegend wird der den Querparkplatz 6 zumindest teilweise charakterisierende Parkplatzdatensatz dahingehend untersucht, ob unter Berücksichtigung der Egokraftfahrzeugbreite 25 (b) rechtsseitig und linksseitig des Egokraftfahrzeugs 2 der Komfortabstand 30 bzw. der zweite Abstand $d_2$ vorhanden wäre, wenn die Parkposition 1 entsprechend bestimmt werden würde bzw. wenn das Egokraftfahrzeug 2 entsprechend der Parkposition 1 dann in dem Querparkplatz 6 parken würde. Mit anderen Worten wird im Verfahrensschritt S2 untersucht, ob ein Fahrer sowie ein Beifahrer bzw. ein auf der Beifahrerseite angeordnete Passagier des Egokraftfahrzeug 2 jeweils das ansprechende Klappenelement 11 in die jeweilige zweite Raststellung 29 oder darüber hinaus verstellen kann. Es wird also untersucht, ob es bei dem anhand der Parkposition 1 geparkten Egokraftfahrzeugs 2 möglich wäre, dass sowohl die Fahrertür 12 als auch die Beifahrertür 13 jeweils in die zweite Raststellung 29 verstellbar sind. Mittels einer mathematischen Formel ausgedrückt wird in Verfahrensschritt S2 untersucht, ob

$$B \geq b + 2 \cdot d_2$$

Ist dies der Fall, folgt auf den Verfahrensschritt S2 ein weiterer Verfahrensschritt S3, in welchem der Querparkplatz 6 als ein sicher nutzbarer Querparkplatz kategorisiert wird. Sodann wird in einem weiteren Verfahrensschritt S4 die Parkposition 1 derart festgelegt, dass das Egokraftfahrzeug 2, sobald es anhand der Parkposition 1 auf den Querparkplatz geparkt wird oder ist, mittig zwischen den benachbart parkenden Kraftfahrzeugen 7 und insbesondere mittig auf dem Querparkplatz 6 geparkt wird. Das bedeutet, dass in dem Verfahrensschritt S4 das Egokraftfahrzeug 2 bzw. die Parkposition 1 derart ausgerichtet wird, dass die Längsmittenebenen 22, 23 zusammenfallen, sobald das Egokraftfahrzeug 2 auf dem Querparkplatz 6 geparkt ist. Hierbei wird dann aufgrund des Parkens des Egokraftfahrzeugs 2 auf dem Querparkplatz 6 beidseitig des Egokraftfahrzeugs 2 der zweite Abstand 30 bzw. der Komfortabstand $d_2$ oder ein jeweils größerer Abstand ausgebildet.

Wird im Verfahrensschritt S2, bei welchem untersucht wird, ob die Klappenelemente 11 beidseitig des Egokraftfahrzeugs 2 in die jeweils zweite Raststellung 29 oder weiter verstellbar sind, festgestellt, dass dies nicht möglich wäre, nachdem das Egokraftfahrzeug 2 auf dem Querparkplatz 6 geparkt worden ist, werden die Abmessungen des Querparkplatzes 6 bzw. der Parkplatzdatensatz in einem weiteren Verfahrensschritt S5 dahingehend untersucht, ob es sich bei dem Querparkplatz 6 um einen kleinen Querparkplatz 6 handelt. In einer mathematischen Formel ausgedrückt, wird der Querparkplatz 6 bzw. der den Querparkplatz 6 charakterisierenden Parkplatzdatensatz dahingehend analysiert, ob Folgendes zutrifft:

$$b + 2 \cdot d_2 > B \geq b + 2 \cdot d_1$$

Bei einem kleinen Querparkplatz 6, der kein kritischer Querparkplatz 6 ist (was weiter unten noch geprüft wird), ist es bei dem Egokraftfahrzeug 2, wenn dieses bestimmungsgemäß auf dem kleinen Querparkplatz 6 geparkt ist, nicht möglich, die Fahrertür 12 und die Beifahrertür 13 gleichzeitig in die zweite Raststellung 29 zu verstellen. Stattdessen ist es lediglich möglich, die entsprechende Tür 12, 13 in die erste Raststellung 28 und darüber hinaus zu verstellen - aber nicht bis in die zweite Raststellung 29. Dementsprechend schließt sich an den Verfahrensschritt S5 ein Verfahrensschritt S6 an, in welchem der Querparkplatz 6 als ein kleiner Querparkplatz 6 kategorisiert wird.

Es schließt sich dann an den Verfahrensschritt S6 ein weiterer Verfahrensschritt S7 an, in welchem die Parksituation, in welcher der leere Querparkplatz 6 vorgefunden wird, dahingehend untersucht wird, ob eine Fahrertür des rechts benachbart parkenden Kraftfahrzeugs 7 dem leeren Querparkplatz 6 zugewandt ist und ob an wenigstens einer Seite des Egokraftfahrzeugs 2 der Komfortabstand 30 ($d_2$) ausgebildet werden kann. Hierbei sind "rechts" bzw. "links" mit Bezug auf die Vorwärtsfahrtrichtung 16 des Egokraftfahrzeug 2 zu verstehen. Ist also die Fahrertür des rechts parkenden Kraftfahrzeugs 7 auf den Querparkplatz 6 gerichtet, ist bei dem Verfahren in einem weiteren Verfahrensschritt S8 vorgesehen, dass die Parkposition 1 derart bestimmt bzw. festgelegt wird, dass das Egokraftfahrzeug 2 mittig zwischen den benachbart parkenden Kraftfahrzeugen 7 angeordnet wird. Dementsprechend wird beim Einparken des Egokraftfahrzeugs 2 anhand der bestimmten Parkposition 1 beidseitig des Egokraftfahrzeugs 2 der erste Abstand 31 bzw. Mindestabstand $d_1$ oder ein größerer Abstand (der kleiner als der Komfortabstand 30 bzw. $d_2$ ist) ausgebildet. Mit anderen Worten ist dann bei dem fertig geparkten Egokraftfahrzeug 2 das rechts parkende Kraftfahrzeug 7 zumindest über den ersten Abstand 31 ($d_1$) von dem Egokraftfahrzeug 2 beabstandet. Gleiches gilt für das links parkende Kraftfahrzeug 7: Dieses ist zumindest über den ersten Abstand 31 ($d_1$) von dem Egokraftfahrzeug 2 beabstandet.

Weist die Fahrertür des rechts parkenden Kraftfahrzeugs 7 von dem Querparkplatz 6 weg, erfolgt anstelle des Verfahrensschritts S8 ein anderer Verfahrensschritt S9, in welchem unter einem Einparken des Egokraftfahrzeugs 2 anhand der Parkposition 1 auf der Fahrerseite des Egokraftfahrzeugs 2, das heißt zu dem links parkenden Fahrzeug 7, der zweite Abstand 30 bzw. Komfortabstand $d_2$ ausgebildet wird, wobei an der Beifahrerseite des Egokraftfahrzeugs 2 zumindest der Sicherheitsabstand 32 ($d_S$) ausgebildet wird. Mit anderen Worten wird das Egokraftfahrzeug 2 anhand der Parkposition 1 dann außermittig zwischen den benachbart parkenden Kraftfahrzeugen 7 ausgerichtet. Folglich wird beim Bestimmen der Parkposition 1 der Versatz 24 zwischen den Längsmittenebenen 22, 23 derart ausgewählt bzw. bemessen, dass unter einem Einfahren des Egokraftfahrzeugs 2 auf die Parkposition 1 linksseitig der Komfortabstand 30 ($d_2$) und rechtsseitig zumindest des Sicherheitsabstand 32 ($d_S$) bereitgestellt wird.

Wird im Verfahrensschritt S5, in welchem geprüft wird, ob die Klappenelemente 11 bzw. die Türen 12, 13 beidseitig des Egokraftfahrzeugs 2 in die erste Raststellung 28 oder weiter verstellbar sind, festgestellt, dass dies nicht möglich sein wird, nachdem das Egokraftfahrzeug 2 auf dem Querparkplatz 6 geparkt worden ist, werden die Abmessungen des Querparkplatzes 6 bzw. der Parkplatzdatensatz in einem weiteren Verfahrensschritt S10 dahingehend untersucht, ob es sich bei dem Querparkplatz 6 um einen kritischen Querparkplatz 6 handelt. In einer mathematischen Formel ausgedrückt, wird der Querparkplatz 6 bzw. der den Querparkplatz 6 charakterisierenden Parkplatzdatensatz dahingehend analysiert, ob Folgendes zutrifft:

$$b + 2 \cdot d_1 > B \geq b + 2 \cdot d_S$$

Bei einem kritischen Querparkplatz 6, der ein noch ein sicher nutzbarer Querparkplatz 6 ist (was weiter unten noch geprüft wird), ist es bei dem Egokraftfahrzeug 2, wenn dieses bestimmungsgemäß auf dem kritischen Querparkplatz 6 geparkt ist, nicht möglich, die Fahrertür 12 und die Beifahrertür 13 gleichzeitig in die erste Raststellung 28 zu verstellen. Stattdessen ist es zwar lediglich möglich, die entsprechende Tür 12, 13 aus der vollständigen Geschlossenstellung auszurücken - aber nicht bis in die erste Raststellung 28. Dementsprechend schließt sich an den Verfahrensschritt S10 ein Verfahrensschritt S11 an, in welchem der Querparkplatz 6 als ein kritischer Querparkplatz 6 kategorisiert wird.

Es schließt sich dann an den Verfahrensschritt S11 ein weiterer Verfahrensschritt S12 an, in welchem die Parksituation, in welcher der leere Querparkplatz 6 vorgefunden wird, dahingehend untersucht wird, ob eine Fahrertür des rechts benachbart parkenden Kraftfahrzeugs 7 dem leeren Querparkplatz 6 zugewandt ist und ob an wenigstens einer Seite des Egokraftfahrzeugs 2 der Mindestabstand 31 ($d_1$) ausgebildet werden kann. Ist also die Fahrertür des rechts parkenden Kraftfahrzeugs 7 auf den Querparkplatz 6 gerichtet, ist bei dem Verfahren in einem weiteren Verfahrensschritt S13 vorgesehen, dass die Parkposition 1 derart bestimmt bzw. festgelegt wird, dass das Egokraftfahrzeug 2 mittig zwischen den benachbart parkenden Kraftfahrzeugen 7 angeordnet wird. Dementsprechend wird beim Einparken des Egokraftfahrzeugs 2 anhand der bestimmten Parkposition 1 beidseitig des Egokraftfahrzeugs 2 der Sicherheitsabstand $d_S$ oder ein größerer Abstand (der kleiner als der Mindestabstand 31 bzw. $d_1$ ist) ausgebildet. Mit anderen Worten ist dann bei dem fertig geparkten Egokraftfahrzeug 2 das rechts parkende Kraftfahrzeug 7 zumindest über den Sicherheitsabstand 32 ($d_S$) von dem Egokraftfahrzeug 2 beabstandet. Gleiches gilt für das links parkende Kraftfahrzeug 7: Dieses ist zumindest über Sicherheitsabstand 32 ($d_S$) von dem Egokraftfahrzeug 2 beabstandet.

Weist die Fahrertür des rechts parkenden Kraftfahrzeugs 7 von dem Querparkplatz 6 weg, erfolgt anstelle des Verfahrensschritts S13 ein anderer Verfahrensschritt S14, in welchem unter einem Einparken des Egokraftfahrzeugs 2 anhand der Parkposition 1 auf der Fahrerseite des Egokraftfahrzeugs 2, das heißt zu dem links parkenden Fahrzeug 7, der erste Abstand 31 bzw. Mindestabstand $d_1$ ausgebildet wird, wobei an der Beifahrerseite des Egokraftfahrzeugs 2 zumindest der Sicherheitsabstand 32 ($d_S$) ausgebildet wird. Mit anderen Worten wird das Egokraftfahrzeug 2 anhand der Parkposition 1 dann außermittig zwischen den benachbart parkenden Kraftfahrzeugen 7 ausgerichtet. Folglich wird beim Bestimmen der Parkposition 1 der Versatz 24 zwischen den Längsmittenebenen 22, 23 derart ausgewählt bzw. bemessen, dass unter einem Einfahren des Egokraftfahrzeugs 2 auf die Parkposition 1 linksseitig der erste Abstand 31 ($d_1$) und rechtsseitig zumindest des Sicherheitsabstand 32 ($d_S$) bereitgestellt wird.

Wird im Verfahrensschritt S10, in welchem geprüft wird, ob die Klappenelemente 11 bzw. die Türen 12, 13 beidseitig des Egokraftfahrzeugs 2 in die erste Raststellung 28 oder weiter verstellbar sind, festgestellt, dass, nachdem das Egokraftfahrzeug 2 auf dem Querparkplatz 6 geparkt worden ist, die Türen nicht bis in die erste Rastposition 28 verstellbar wären, handelt es sich bei dem Querparkplatz 6 dann um einen nicht sicher nutzbaren Querparkplatz 6. Das bedeutet, dass der Querparkplatz 6 folgende Bedingung erfüllt:

$$B < b + 2 \cdot d_S$$

Ein Querparkplatz 6 mit einer solchen Breite 26 (B) bietet rechtsseitig wie linksseitig des Egokraftfahrzeugs 2 nicht genügend Platz, um sicher - insbesondere zumindest teilautomatisch, vollautomatisch, oder autonom - in/auf den Querparkplatz 6 mit dem Egokraftfahrzeug 2 zu fahren, um dort damit zu parken. In diesem Fall folgt dann auf den Verfahrensschritt S10 ein weiterer Verfahrensschritt S15, in welchem der den Querparkplatz 6 als ein nicht sicher nutzbarer ("zu kleiner") Querparkplatz 6 kategorisiert wird. Nach diesem Verfahrensschritt S15 ist dann die Parkplatzsuche fortzusetzen oder mit dem Egokraftfahrzeug 2 manuell einzuparken, wobei dann besonders Augenmerk auf das Einparkmanöver und auf das Öffnen der Klappenelemente 11 zu legen ist, um die benachbart parkenden Kraftfahrzeuge 7 beim Parken des Egokraftfahrzeugs 2 nicht zu beschädigen.

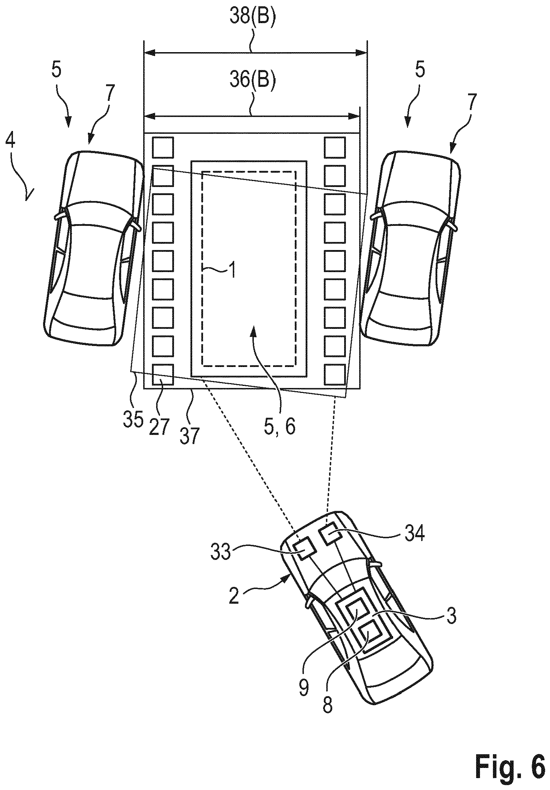

Fig. 6 zeigt in schematischer Ansicht den Querparkplatz 6, der mittels zweierlei Sensoreinheiten 33, 34 erfasst wird. Die Sensoreinheiten 33, 34 sind insbesondere ein Teil des Fahrerassistenzsystems 3, bevorzugt der Sensorik 8. Das bedeutet, dass das Egokraftfahrzeug 2, das mit dem Fahrerassistenzsystem 3 ausgerüstet ist, die Sensorik 8 und infolgedessen die Sensoreinheiten 33, 34 aufweist. Beim Erfassen des Querparkplatzes 6 mit den beiden Sensoreinheiten 33, 34 erfasst die erste Sensoreinheit 33 die Bodenmarkierung 27 des Querparkplatzes 6. Des Weiteren erfasst dabei, beispielsweise gleichzeitig oder nachfolgend, die zweite Sensorik 34 ein Freivolumen 35 des Querparkplatzes 6. Das Freivolumen 35 des Querparkplatzes 6 ist dadurch gekennzeichnet, dass es frei von Objekten, insbesondere Kraftfahrzeugen 7, ist, sodass das Freivolumen 35 des Querparkplatzes 6 zum Parken verfügbar ist bzw. genutzt werden kann. Das Freivolumen 35 ist des Weiteren oberhalb der Parkfläche 4 nach oben hin angeordnet, das heißt, das Freivolumen 35 wird an dessen Unterseite durch die Parkfläche 4 begrenzt.

Indem die erste Sensoreinheit 33 die Bodenmarkierung 27 des Querparkplatzes 6 erfasst, stellt die erste Sensoreinheit 33 einen Referenzdatensatz bereit, beispielsweise stellt die erste Sensoreinheit 33 der Steuereinheit 9 den Referenzdatensatz bereit. Dementsprechend stellt die zweite Sensoreinheit 34 unter einem Erfassen des Freivolumens 35 einen Freivolumendatensatz bereit, insbesondere stellt die zweite Sensoreinheit 34 der Steuereinheit 9 den Freivolumendatensatz bereit. Der Referenzdatensatz und der Freivolumendatensatz werden dann mittels der Steuereinheit 9 zu dem Parkplatzdatensatz weiterverarbeitet oder mit dem Parkplatzdatensatz datentechnisch in Verbindung gebracht bzw. mit diesem verknüpft, sodass hiernach die Steuereinheit 9 basierend auf dem Referenzdatensatz und auf dem Freivolumendatensatz sowie eventuell anhand des Parkplatzdatensatzes die Parkposition 1 bestimmt bzw. festlegt.

Die erste Sensoreinheit 33, mittels derer die Bodenmarkierung 27 des Querparkplatzes 6 erfasst wird, ist insbesondere als eine bildverarbeitende Sensoreinheit ausgebildet. Das bedeutet, dass die Bodenmarkierung 27 des Querparkplatzes 6 durch die bildverarbeitende Sensoreinheit 33 erfasst wird. Dahingegen handelt es sich bei der zweiten Sensorwert 34 um eine Sensoreinheit, die auf einem anderen Sensorprinzip basiert als die erste Sensoreinheit 33. Im vorliegenden Beispiel ist die Sensoreinheit 34 als eine Radarsensoreinheit ausgebildet.

Indem der Querparkplatz 6 durch die zumindest zwei Sensoreinheiten 33, 34 erfasst wird, ist so der dann den Querparkplatz 6 besonders genau charakterisierende Parkplatzdatensatz erzeugbar, woraufhin die Parkposition 1 besonders effizient in Bezug zu dem Querparkplatz 6 bestimmt bzw. ermittelt werden kann. Des Weiteren kann es bei einer Parksituation, wie sie in Fig. 6 dargestellt ist, dazu kommen, dass das Freivolumen 35 - bei welchem vereinfacht angenommen wird, dass es eine rechteckige Grundfläche aufweist - und die Bodenmarkierung 27 - bei welcher ebenfalls vereinfacht angenommen wird, dass sie einen rechteckigen Querparkplatzes 6 begrenzt - schräg aufeinander liegen. Dies ist - wie dargestellt - im folgenden Beispiel der Fall, da die zu dem Querparkplatz 6 benachbart parkenden Kraftfahrzeuge 7 auf deren jeweiligem Querparkplatz 5 schräg angeordnet bzw. abgeparkt worden sind. In diesem Fall kann es sein, dass ein mittiges Parken des Egokraftfahrzeugs 2 in Bezug zu den Bodenmarkierungen 27 das Öffnen wenigstens eines Klappenelements 11 des Egokraftfahrzeugs 2 behindern würde, sodass ausgehend von der in Fig. 6 dargestellten Parksituation bei dem Verfahren vorgesehen sein kann, dass außermittig zwischen den Bodenmarkierung 27 des Querparkplatzes 6 geparkt wird. Zum einen besteht die Möglichkeit, die verfügbare Breite B mit einer Kantenlänge 36 eines rechteckigen Freiraums 37 gleichzusetzen, wobei die Breite bzw. Kantenlänge 36 des rechteckigen Freiraums 37 zwischen einem ersten Punkt des links benachbart parkenden Kraftfahrzeugs 7 und einem zweiten Punkt des rechts benachbart parkenden Kraftfahrzeugs 7 vorliegt, wobei diese beiden Punkte der benachbart parkenden Kraftfahrzeuge 7, die die Kantenlänge 36 bestimmen, jeweils am nächsten an dem Querparkplatz 6 angeordnet sind. Das bedeutet, dass zum Festlegen der Parkposition 1 hierdurch die verfügbare Breite 26 des Querparkplatzes 6 durch die Kantenlänge 36 des Freiraums 37 bestimmt wird.

Alternativ kann bei dem Verfahren vorgesehen sein, dass die verfügbare Breite 26 des Querparkplatzes 6 lediglich auf Höhe der Fahrertür 12 des Egokraftfahrzeugs 2 bestimmt wird. Dies ist in Fig. 6 durch einen Abstand 38 gekennzeichnet, der zwischen dem links benachbart parkenden Kraftfahrzeug 7 und dem rechts benachbart parkenden Kraftfahrzeug 7 vorliegt, und zwar auf Höhe der Fahrertür 12 des Egokraftfahrzeugs 2, wenn dieses in den Querparkplatz 6 eingeparkt ist. Mit anderen Worten wird der Abstand 38 zwischen den benachbart parkenden Kraftfahrzeugen 7 in Bezug auf die Parkposition 1 dort zwischen den Kraftfahrzeugen 7 gemessen, wo gemäß der Parkposition 1 die Fahrertür 12 des Egokraftfahrzeugs 2 angeordnet sein wird. Dieser Abstand 38 wird dann als verfügbare Breite 26 (B) herangezogen, um beispielsweise den Versatz 24 zu bestimmen.

## Bezugszeichenliste

1 Parkposition
2 Egokraftfahrzeug
3 Fahrerassistenzsystem
4 Parkfläche
5 Querparkplatz
6 Querparkplatz
7 Kraftfahrzeug
8 Sensorik
9 Steuereinheit
10 Zugangsparameter
11 Klappenelement
12 Fahrertür
13 Beifahrertür
14 Zugangsparameter
15 Parkfahrtrajektorie
16 Vorwärtsfahrtrichtung
17 Vorwärtsfahrtrichtung
18 Erste Parkfahrtrajektorie
19 Zweite Parkfahrtrajektorie
20 Dritte Parkfahrtrajektorie
21 Wandelement
22 Längsmittenebene
23 Längsmittenebene
24 Versatz
25 Kraftfahrzeugbreite

| 26 | Verfügbare Breite |
| --- | --- |
| 27 | Bodenmarkierung |
| 28 | Erste Raststellung |
| 29 | Zweite Raststellung |
| 30 | Zweiter Abstand (Komfortabstand) |
| 31 | Erster Abstand (Mindestabstand) |
| 32 | Sicherheitsabstand |
| 33 | Sensoreinheit |
| 34 | Sensoreinheit |
| 35 | Freivolumen |
| 36 | Kantenlänge |
| 37 | Freiraum |
| 38 | Abstand |

| S1 | Verfahrensschritt |
| --- | --- |
| S2 | Verfahrensschritt |
| S3 | Verfahrensschritt |
| S4 | Verfahrensschritt |
| S5 | Verfahrensschritt |
| S6 | Verfahrensschritt |
| S7 | Verfahrensschritt |
| S8 | Verfahrensschritt |
| S9 | Verfahrensschritt |
| S10 | Verfahrensschritt |
| S11 | Verfahrensschritt |
| S12 | Verfahrensschritt |
| S13 | Verfahrensschritt |
| S14 | Verfahrensschritt |
| S15 | Verfahrensschritt |

## Patentansprüche

1. Verfahren zum Bestimmen einer Parkposition (1) für ein Kraftfahrzeug (2), wobei mittels einer Sensorik (8) des Kraftfahrzeugs (2) ein Querparkplatz (6) erfasst wird und ein den Querparkplatz (6) charakterisierender Parkplatzdatensatz einer Steuereinheit (9) des Kraftfahrzeugs (2) bereitgestellt wird, und die Parkposition (1) anhand des Parkplatzdatensatzes sowie anhand eines Zugangsparameters (10) des Kraftfahrzeugs (2), der eine Öffnungsmöglichkeit wenigstens eines Klappenelements (11, 12, 13) des Kraftfahrzeugs (2) charakterisiert, durch die Steuereinheit (9) bestimmt wird, und

   die Parkposition (1) anhand eines weiteren Zugangsparameters (14) eines weiteren Kraftfahrzeugs (7), das benachbart zu der Parkposition (1) parkt, festgelegt wird, **dadurch gekennzeichnet, dass** zum Bestimmen der Parkposition (1) mittels der Steuereinheit (9) anhand des Parkplatzdatensatzes und anhand der Zugangsparameter (10, 14) eine Ausrichtung einer Vorwärtsfahrtrichtung (16) des Kraftfahrzeugs (2) in Bezug zu dem Querparkplatz (6) bestimmt wird, und die Ausrichtung der Vorwärtsfahrtrichtung (16) des Kraftfahrzeugs (2) in Bezug zu dem Querparkplatz (2) ferner anhand wenigstens einer der folgenden Gegebenheiten bestimmt wird:

   - an den Querparkplatz (6) angrenzender Straßentyp,
   - Komplexität eines zum Fahren auf den Querparkplatz (6) erforderlichen Fahrmanövers (15, 18, 19, 20),
   - Ausrichtung einer Vorwärtsfahrtrichtung (17) des benachbart parkenden Kraftfahrzeugs (7),

   Beladungszustand eines Laderaums des Kraftfahrzeugs (2), und wobei basierend auf einer verfügbaren Breite (26, B) des Querparkplatzes (6), auf einer Kraftfahrzeugbreite (25, b) und auf dem Zugangsparameter (10), der eine Offenstellung des Klappenelements (11, 12, 13) charakterisiert, mittels der Steuereinheit (9) der Querparkplatz (6) in eine der folgenden Kategorien eingeteilt wird:

   - sicher nutzbarer Querparkplatz (6),
   - kleiner Querparkplatz (6),
   - kritischer Querparkplatz (6),
   - nicht sicher nutzbarer Querparkplatz (6).

2. Verfahren nach Anspruch 1,
   **dadurch gekennzeichnet, dass**
   zum Bestimmen der Parkposition (1) mittels der Steuereinheit (9) anhand des Parkplatzdatensatzes und anhand der Zugangsparameter (10, 14) ein Versatz (24) zwischen einer senkrechten Längsmittenebene (22) des Kraftfahrzeugs (2) und eine senkrechter Längsmittenebene (23) des Querparkplatzes (6) bestimmt wird.

3. Verfahren nach Anspruch 1 oder 2,
   **dadurch gekennzeichnet, dass**
   die eingeteilte Kategorie des Querparkplatzes (6) einem Nutzer des Kraftfahrzeugs (2) bereitgestellt wird, insbesondere über eine Ausgabeeinheit, worauf dem Nutzer eine Auswahlmöglichkeit bereitgestellt wird, ob tatsächlich auf dem Querparkplatz (6) geparkt werden soll oder ob eine Parkplatzsuche fortgesetzt werden soll.

4. Verfahren nach einem der vorhergehenden Ansprüche,
   **dadurch gekennzeichnet, dass**
   die verfügbare Breite (26, B) des Querparkplatzes (6) auf Höhe einer Fahrertür (12) des Kraftfahrzeugs (2) bestimmt wird, insbesondere beim Bestimmen der Parkposition (1) dann von dieser berücksichtigt wird, dass abseits der Fahrertür des Kraftfahrzeugs (2) ein engerer Abstand zwischen einem der benachbarten Kraftfahrzeuge (7) und dem Kraftfahrzeug (2) vorhanden sein kann.

**5.** Verfahren nach einem der vorhergehenden Ansprüche,

**dadurch gekennzeichnet, dass**,

wenn der Querparkplatz (6) als kleiner Querparkplatz (6) kategorisiert wird, mittels der Steuereinheit (9) die Parkposition (1) derart bestimmt wird, dass an wenigstens einem der Klappenelemente (11, 12, 13) des Kraftfahrzeugs (2) ein Komfortabstand (30, $d_2$) zu dem benachbart parkenden Kraftfahrzeug (7) bereitgestellt wird.

**6.** Verfahren nach einem der vorhergehenden Ansprüche,

**dadurch gekennzeichnet, dass**,

wenn der Querparkplatz (6) als kritischer Querparkplatz (6) kategorisiert wird, mittels der Steuereinheit (9) die Parkposition (1) derart bestimmt wird, dass an wenigstens einem der Klappenelemente (11, 12, 13) des Kraftfahrzeugs (2) ein Mindestabstand (31, $d_1$) zu dem benachbart parkenden Kraftfahrzeug (7) bereitgestellt wird.

**7.** Verfahren nach einem der vorhergehenden Ansprüche,

**dadurch gekennzeichnet, dass**

zum Erfassen des Querparkplatzes (6) zwei voneinander unterschiedlich ausgebildete Sensoreinheiten (33, 34) der Sensorik (8) eingesetzt werden, wobei eine erste dieser Sensoreinheiten (33, 34) eine den Querparkplatz (6) definierende Bodenmarkierung (27) erfasst, um der Steuereinheit (9) einen den Querparkplatz (6) teilweise charakterisierenden Referenzdatensatz bereitzustellen, und eine zweite dieser Sensoreinheiten (33, 34) ein Freivolumen (35) des Querparkplatzes (6) erfasst, um der Steuereinheit (9) einen den Querparkplatz (6) teilweise charakterisierenden Freivolumendatensatz bereitzustellen, sodass der Steuereinheit (9) mittels der Sensorik (8) basierend auf dem Referenzdatensatz und dem Freivolumendatensatz der Parkplatzdatensatz bereitgestellt wird und infolgedessen eine entsprechende Parkposition (1) ermittelt wird.

**8.** Fahrerassistenzsystem (3) das zum Durchführen eines nach einem der vorhergehenden Ansprüche ausgebildeten Verfahrens zum Bestimmen einer Parkposition (1) für ein Kraftfahrzeug (2) eingerichtet ist.

**9.** Kraftfahrzeug (2) mit einem nach Anspruch 8 ausgebildeten Fahrerassistenzsystem (3).

## Claims

**1.** Method for determining a parking position (1) for a motor vehicle (2), wherein a perpendicular parking space (6) is detected by means of a sensor system (8) of the motor vehicle (2) and a parking space data set characterizing the perpendicular parking space (6) is provided to a control unit (9) of the motor vehicle (2), and the parking position (1) is determined by the control unit (9) on the basis of the parking space data set and on the basis of an access parameter (10) of the motor vehicle (2) which characterizes an opening possibility of at least one panel element (11, 12, 13) of the motor vehicle (2), and the parking position (1) is established on the basis of a further access parameter (14) of a further motor vehicle (7) that is parked adjacently to the parking position (1),

**characterized in that**

to determine the parking position (1) by means of the control unit (9) on the basis of the parking space data set and on the basis of the access parameters (10, 14), an orientation of a forward driving direction (16) of the motor vehicle (2) in relation to the perpendicular parking space (6) is determined, and

the orientation of the forward driving direction (16) of the motor vehicle (2) in relation to the perpendicular parking space (2) is further determined on the basis of at least one of the following conditions:

- type of road adjacent to the perpendicular parking space (6),
- complexity of a driving maneuver (15, 18, 19, 20) required to drive into the perpendicular parking space (6),
- orientation of a forward driving direction (17) of the adjacently parked motor vehicle (7),

loading state of a storage space of the motor vehicle (2), and wherein, on the basis of an available width (26, B) of the perpendicular parking space (6), a motor vehicle width (25, b) and the access parameter (10) which characterizes an open position of the panel element (11, 12, 13), the perpendicular parking space (6) is assigned to one of the following categories by means of the control unit (9):

- safe perpendicular parking space (6),
- small perpendicular parking space (6),
- critical perpendicular parking space (6),
- perpendicular parking space (6) unsafe for use.

**2.** Method according to claim 1,

**characterized in that**

to determine the parking position (1) by means of the control unit (9) on the basis of the parking space data set and on the basis of the access parameters (10, 14), an offset (24) between a vertical longitudinal center plane (22) of the motor vehicle (2) and a vertical longitudinal center plane (23) of the perpendicular parking space (6) is determined.

3. Method according to claim 1 or claim 2, **characterized in that** the assigned category of the perpendicular parking space (6) is provided to a user of the motor vehicle (2), in particular via an output unit, whereupon the user is provided with a selection option as to whether parking should actually take place in the perpendicular parking space (6) or whether a parking space search should be continued.

4. Method according to any of the preceding claims, **characterized in that** the available width (26, B) of the perpendicular parking space (6) is determined at the level of a driver's door (12) of the motor vehicle (2), and, in particular when determining the parking position (1), it is then taken into account thereby that away from the driver's door of the motor vehicle (2) there may be a closer distance between one of the adjacent motor vehicles (7) and the motor vehicle (2).

5. Method according to any of the preceding claims, **characterized in that** if the perpendicular parking space (6) is categorized as a small perpendicular parking space (6), the parking position (1) is determined by means of the control unit (9) in such a way that a comfort distance $(30, d_2)$ with respect to the adjacently parked motor vehicle (7) is provided to at least one of the panel elements (11, 12, 13) of the motor vehicle (2).

6. Method according to any of the preceding claims, **characterized in that** if the perpendicular parking space (6) is categorized as a critical perpendicular parking space (6), the parking position (1) is determined by means of the control unit (9) in such a way that a minimum distance $(31, d_1)$ with respect to the adjacently parked motor vehicle (7) is provided to at least one of the panel elements (11, 12, 13) of the motor vehicle (2).

7. Method according to any of the preceding claims, **characterized in that** to detect the perpendicular parking space (6), two sensor units (33, 34) of the sensor system (8) which are designed differently from one another are used, a first of these sensor units (33, 34) detecting a ground marking (27) defining the perpendicular parking space (6) in order to provide the control unit (9) with a reference data set partially characterizing the perpendicular parking space (6), and a second of these sensor units (33, 34) detecting a free volume (35) of the perpendicular parking space (6) in order to provide the control unit (9) with a free volume data set partially characterizing the perpendicular parking space (6), so that the parking space data set is provided to the control unit (9) by means of the sensor system (8) on the basis of the reference data set and the free volume data set and as a result a corresponding parking position (1) is determined.

8. Driver assistance system (3) which is designed to carry out a method according to any of the preceding claims for determining a parking position (1) for a motor vehicle (2).

9. Motor vehicle (2) comprising a driver assistance system (3) designed according to claim 8.

**Revendications**

1. Procédé de détermination d'une position de stationnement (1) pour un véhicule automobile (2), dans lequel une place de stationnement transversale (6) est détectée au moyen d'un système de capteurs (8) du véhicule automobile (2) et un jeu de données de place de stationnement caractérisant la place de stationnement transversale (6) est mis à la disposition d'une unité de commande (9) du véhicule automobile (2), et la position de stationnement (1) est déterminée par l'unité de commande (9) à l'aide du jeu de données de place de stationnement ainsi qu'à l'aide d'un paramètre d'accès (10) du véhicule automobile (2), qui caractérise une possibilité d'ouverture d'au moins un élément de volet (11, 12, 13) du véhicule automobile (2), et la position de stationnement (1) est définie à l'aide d'un autre paramètre d'accès (14) d'un autre véhicule automobile (7) qui se gare au voisinage de la position de stationnement (1), **caractérisé en ce que**

pour déterminer la position de stationnement (1) au moyen de l'unité de commande (9) à l'aide du jeu de données de place de stationnement et à l'aide des paramètres d'accès (10, 14), une orientation d'une direction de marche avant (16) du véhicule automobile (2) est déterminée par rapport à la place de stationnement transversale (6), et l'orientation de la direction de marche avant (16) du véhicule automobile (2) par rapport à la place de stationnement transversale (2) est en outre déterminée à l'aide d'au moins l'une des conditions suivantes :

- type de rue adjacent à la place de stationnement transversale (6),
- complexité d'une manœuvre de conduite (15, 18, 19, 20) nécessaire pour se rendre sur la place de stationnement transversale (6),
- orientation d'une direction de marche avant (17) du véhicule automobile (7) stationné au voisinage,

état de chargement d'un espace de chargement du véhicule automobile (2), et dans lequel, sur la base d'une largeur disponible (26, B) de la place de stationnement transversale (6), d'une largeur de véhicule automobile (25, b) et du paramètre d'accès (10) qui caractérise une position ouverte de l'élément de volet (11, 12, 13), la place de stationnement transversale (6) est classée au moyen de l'unité de commande (9) dans l'une des catégories suivantes :

- place de stationnement transversale (6) utilisable en toute sécurité,
- petite place de stationnement transversale (6),
- place de stationnement transversale (6) critique,
- place de stationnement transversale (6) non utilisable en toute sécurité.

2. Procédé selon la revendication 1,
   **caractérisé en ce que**
   pour déterminer la position de stationnement (1) au moyen de l'unité de commande (9) à l'aide du jeu de données de place de stationnement et à l'aide des paramètres d'accès (10, 14), on détermine un décalage (24) entre un plan médian longitudinal vertical (22) du véhicule automobile (2) et un plan médian longitudinal vertical (23) de la place de stationnement transversale (6).

3. Procédé selon la revendication 1 ou 2,
   **caractérisé en ce que**
   la catégorie classée de la place de stationnement transversale (6) est mise à la disposition d'un utilisateur du véhicule automobile (2), en particulier par l'intermédiaire d'une unité de sortie, à la suite de quoi une possibilité de choix est mise à disposition de l'utilisateur, à savoir s'il doit effectivement stationner sur la place de stationnement transversale (6) ou s'il doit poursuivre une recherche de place de stationnement.

4. Procédé selon l'une des revendications précédentes,
   **caractérisé en ce que**
   la largeur disponible (26, B) de la place de stationnement transversale (6) est déterminée à hauteur d'une porte de conducteur (12) du véhicule automobile (2), en particulier lors de la détermination de la position de stationnement (1), celle-ci tient alors compte du fait qu'à l'écart de la porte de conducteur du véhicule automobile (2), il peut y avoir une distance plus étroite entre l'un des véhicules automobiles (7) voisins et le véhicule automobile (2).

5. Procédé selon l'une des revendications précédentes,
   **caractérisé en ce que,**
   lorsque la place de stationnement transversale (6) est catégorisée comme petite place de stationnement transversale (6), la position de stationnement (1) est déterminée au moyen de l'unité de commande (9), de telle sorte qu'une distance de confort (30, $d_2$) est mise à disposition sur au moins l'un des éléments de volet (11, 12, 13) du véhicule automobile (2) par rapport au véhicule automobile (7) stationnant au voisinage.

6. Procédé selon l'une des revendications précédentes,
   **caractérisé en ce que,**
   lorsque la place de stationnement transversale (6) est catégorisée comme place de stationnement transversale (6) critique, la position de stationnement (1) est déterminée au moyen de l'unité de commande (9), de telle sorte qu'une distance minimale (31, $d_1$) est mise à disposition sur au moins l'un des éléments de volet (11, 12, 13) du véhicule automobile (2) par rapport au véhicule automobile (7) stationnant au voisinage.

7. Procédé selon l'une des revendications précédentes,
   **caractérisé en ce que**
   pour détecter la place de stationnement transversale (6), on utilise deux unités de détection (33, 34) du système de capteurs (8), réalisées différemment l'une de l'autre, dans lequel une première de ces unités de détection (33, 34) détecte un marquage au sol (27) définissant la place de stationnement transversale (6), afin de mettre à disposition de l'unité de commande (9) un jeu de données de référence caractérisant partiellement la place de stationnement transversale (6), et une deuxième de ces unités de détection (33, 34) détecte un volume libre (35) de la place de stationnement transversale (6) pour fournir à l'unité de commande (9) un jeu de données de volume libre caractérisant partiellement la place de stationnement transversale (6), de sorte que le jeu de données de place de stationnement est mis à disposition de l'unité de commande (9) au moyen du système de capteurs (8) sur la base du jeu de données de référence et du jeu de données de volume libre et qu'une position de stationnement (1) correspondante est par conséquent déterminée.

8. Système d'assistance au conducteur (3) agencé pour mettre en œuvre un procédé de détermination d'une position de stationnement (1) pour un véhicule automobile (2), réalisé selon l'une des revendications précédentes.

9. Véhicule automobile (2) comportant un système d'assistance au conducteur (3) réalisé selon la revendication 8.

Fig. 1

**Fig. 2a)**

**Fig. 2b)**

Fig. 2c)

Fig. 2d)

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 10606272 B2
- US 8319663 B2
- EP 3081731 A1

- EP 2597016 A1
- DE 102011077173 A1
- WO 2018177702 A1